# EUROPEAN PATENT SPECIFICATION

(11) **EP 0 755 938 B1**
(45) Date of publication and mention of the grant of the patent: **07.03.2001**
(21) Application number: 95111829.8
(22) Date of filing: 28.07.1995
(51) Int. Cl.: C07F 11/00, C08G 61/08

(54) **Ligated polyoxometalates and method for their synthesis**
Verknüpfte Polyoxometallate und Verfahren zu deren Herstellung
Polyoxometallates liés et procédé de préparation

(43) Date of publication of application: 29.01.1997
(73) Proprietor: THE B.F. GOODRICH COMPANY, Akron Ohio 44313-1799 (US)
(72) Inventor: Mazany, Anthony M., Akron, Ohio 44303 (US)
(74) Representative: Weber, Thomas, Dr.Dipl.-Chem.

(56) References cited:
- EP-A- 0 188 116
- US-A- 4 424 164
- US-A- 4 426 502
- JOURNAL OF THE AMERICAN CHEMICAL SOCIETY, vol. 97, no. 20, 1975 pages 5735-5738, KWAK, W. ET AL. 'stable organic derivatives of heteropoly anions, pentamolybdobisphosphonates'
- CHEMICAL ABSTRACTS, vol. 114, no. 26, 1 July 1991 Columbus, Ohio, US; abstract no. 258406n, KWAK, W.S. ET AL. 'bis(.mu.5-organophosphonato-o,o',o'')-pen ta-.mu.-oxo-pentakis(dioxomolybdates, -tungstates)(4-) (pentametallobisphosphonates)' page 776; & INORG. SYNTH., 1990 pages 123-128,

## Description

### Field of the Invention

The present invention relates to polynuclear metal oxides or polyoxometalates, such as polymolybdates and polytungstates, which are highly soluble in organic solvents. More particularly, the present invention relates to ligated polyoxometalates and methods for their production.

### Background of the Invention

The term "polyoxometalates", as used herein, is a collective term which includes isopolymolybdates, isopolytungstates, and heteropoly species. Certain organoammonium polyoxometalates have found use as catalyst precursors for the ring-opening metathesis polymerization of dicyclopentadiene (DCPD) and other monomers having norbornene structures. US-A- 4,380,617 to Minchak et al. and US-A- 4,426,502 to Minchak describe the use of organoammonium molybdates and tungstates in polymerizing norbornene-type monomers by ring-opening polymerization. These precursors comprise an organoammonium cation in combination with a molybdate or tungstate anion. The disclosed catalysts provide high monomer conversion (greater than 99 percent) when utilized in bulk polymerization processes such as reaction injection molding (RIM). The catalyst will sustain high exotherms, which helps to provide high monomer conversion. The RIM process employs two components: an A component which contains an aluminum alkyl cocatalyst and a B component which contains the organoammonium molybdate or tungstate catalyst component. A significant advance of the disclosed catalyst components over traditional catalysts (WCl₆ and MoCl₅) is that it is less reactive to air and water, and it is less likely to induce prepolymerization of the monomer. These catalyst components are also more soluble in organic solvents, such as the DCPD reactive monomer employed in RIM systems, than traditional catalyst components.

The organoammonium cations derived from the tertiary amines of these precursors, such as tridodecylamine, are good at solubilizing molybdate anions in organic media However, the large size of some of the anions limits the solubility of the catalyst component in organic media. For example, some of the catalyst components are only slightly soluble in hexane. Improvements are desired to extend the shelf-life of RIM system formulations.

Initial reports of organopolyoxometalates date back to 1908. Syntheses for the organoammonium molybdates are described in US-A-4,406,840 to Kroenke, which describes tri(tridecyl)ammonium molybdate; US-A 4,406,839 to Kroenke et al., which describes a process for preparing amine molybdates in a two-phase system; US-A-4,406,838 to Kroenke, which describes trioctylammonium molybdates; and US-A-4,406,837 to Kroenke, which describes methyltri(capryl)ammonium molybdates. These amine molybdates are produced by reacting an amine with a molybdate compound in the presence of an acidic aqueous medium. The synthesis of amine molybdates in the presence of an acid salt is described by Kroenke in US-A-4,217,292. The basic synthesis of organophosphorus and organoarsenic pentamolybdate anions of ligated polyoxometalates, is described by Kwak et al., *J. Am. Chem. Soc.* (1975) **97**, 5735, and Kwak et al., *Inorg. Chem.* (1976) **15**, 9776. Other ligated polymolybdates and polytungstates are described by Liu et al., *J. Chem. Ed*. (1990), Vol. 67, No. 10. However, these ligated polyoxometalates are not known to be soluble in hydrocarbons.

### Summary of the Invention

It is an object of the present invention to provide polyoxometalates which are highly soluble in organic solvents such as cyclohexane.

It is another object of the present invention to provide polyoxometalate complexes which are more soluble in reaction injection molding (RIM) formulations than the organoammonium molybdate and tungstate compounds.

It is another object of the present invention to provide ligated polyoxometalates with organo-substituted onium cations such as ammonium, phosphonium, arsonium, or sulfonium groups.

It is a further object of the present invention to provide a method for producing ligated polyoxometalates having organo-substituted cationic groups within an aqueous medium.

Another object of the present invention is to provide bulk polymerizable storage stable catalyst/monomer feed formulations wherein the catalyst remains soluble in the monomer.

Another object of the invention is to provide a process for the in-mold bulk polymerization of norbornene functional monomers.

It is a further object of the present invention to provide a method for producing ligated polyoxometalates having organo-substituted cationic groups within an organic/aqueous dual-phase medium.

Upon further study of the specification and appended claims, further objects and advantages of this invention will become apparent to those skilled in the art. The present invention relates to an organic soluble polyoxometalate composition comprising an onium cation component an a polyoxometalate anion component wherein said onium cation is selected from the group consisting of organo-substituted ammonium, phosphonium, arsonium, and sulfonium groups, and said anion includes a molybdate or tungstate group that incorporates a ligand, and wherein the total number of carbon atoms in said ammonium group is greater than 19, and the total number of carbon atoms is greater than 15 in said phosphonium, arsonium, and sulfonium groups.
Preferred embodiments become evident from the dependent claims.

The objects are achieved in providing the ligated polyoxometalates with organo-substituted cations of the formula:

[R¹ ₘER² _{m'}]ₙ MₓO_{y}L_{z}

wherein: E represents nitrogen, phosphorus, arsenic, or sulfur; M represents molybdenum or tungsten; O represents oxygen; L represents a ligand selected from the group consisting of substituted-phosphonates, substituted-phosphinates, substituted-arsonates, substituted-stibonates, deprotonated hydroxycarboxylates, deprotonated hydroxydicarboxylates, deprotonated hydroxytricarboxylates, deprotonated dihydroxybenzene, and mixtures thereof; R¹ is independently selected from branched and unbranched C₁ to C₂₀ alkyl, C₂ to C₂₀ alkenyl, C₅ to C₂₀ cycloalkyl, C₆ to C₂₄ aryl, C₆ to C₂₄ aryloxy, C₇ to C₄₀ alkaryl, and ring structures formed with another R¹ group, including those wherein one or two -CH₂- groups are replaced by functional groups selected from -O-, -C(O)-, -OC(O)-, and -CH(OH)-; R² independently represents hydrogen, or the radicals defined under R¹, when E is nitrogen, R¹ and R² are subject to the proviso that all of the R¹ and R² radicals cannot be hydrogen, and the sum of carbon atoms on all of the R¹ and R² radicals is at least 20; and when E is arsenic, phosphorus, and sulfur the sum of all carbon atoms on all of the R¹ and R² radicals is at least 16; n = 6x-2y-Qz, wherein x and y represent the number of M and O atoms based on the valence of +6 for molybdenum or tungsten and -2 for oxygen; Q is the charge on the ligand L; z is 1 to 6; and when E is nitrogen m = 3, m' = 1, when E is arsenic or phosphorus m = 3, m' = 1, and when E is sulfur m = 2, m' = 0.

When L is a substituted-phosphonate, the substituted-phosphonate is represented by the following formula:

R³PO₃⁽²⁻⁾

wherein: R³ represents hydrogen, hydroxy, branched or unbranched C₁ to C₂₀ alkyl, branched and unbranched C₁ to C₁₉ carboxyalkyl, or branched and unbranched hydroxyalkyl, C₅ to C₂₀ cycloalkyl, C₂ to C₂₀ alkenyl, C₆ to C₂₄ aryl, C₆ to C₂₄ aryloxy, C₇ to C₄₀ aralkyl, deprotonated polyols, C₆ to C₂₄ protonated aminoaryl, and C₁ to C₂₀ protonated aminoalkyl;
When L is a substituted-phosphinate, the substituted-phosphinate is represented by the following formula:

R³PO₂H⁽⁻⁾

wherein: R³ is as defined above;
When L is a deprotonated hydroxycarboxylate, the deprotonated hydroxycarboxylate is selected from substituted and unsubstituted C₆ to C₂₄ aromatic deprotonated hydroxy acids wherein the deprotonated hydroxy and carboxy groups are located on contiguous aromatic ring carbon atoms and when substituted said substituents are independently selected from branched and unbranched C₁ to C₂₀ alkyl groups, halogen groups, and mixtures thereof, and the deprotonated α-hydroxyacids are represented by the following formula: 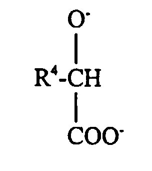 wherein: R⁴ represents branched and unbranched C₁ to C₂₀ alkyl;
When L is a deprotonated hydroxydicarboxylate, the deprotonated hydroxydicarboxylate is represented by the following formula: 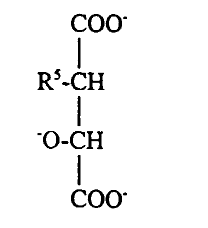 wherein R⁵ represents hydrogen, branched and unbranched C₁ to C₂₀ alkyl, C₂ to C₂₀ alkenyl and C₆ to C₂₄ aryl, and optionally one or two of the deprotonated oxygen atoms can be protonated;

When L is a deprotonated hydroxytricarboxylate, the deprotonated hydroxytricarboxylate is represented by the formula: 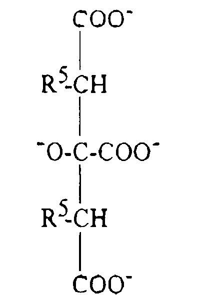 wherein R⁵ is independently selected from the group defined above and;
When L is deprotonated dihydroxy benzene, the deprotonated dihydroxybenzene is represented by the following formula: 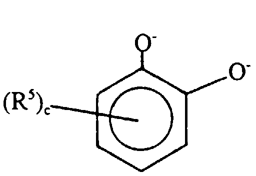 wherein R⁵ is independently selected from radicals as defined above, and c is 0 to 4. The present invention further relates to a process for preparing a polymeric article by the in-mold bulk polymerization of a norbornene functional monomer comprising:
conveying a reactive norbornene functional monomer composition into a mold and polymerizing said monomer composition via ring-opening metathesis polymerization wherein said monomer composition comprises at least one norbornene functional monomer, a cocatalyst, and the catalyst component as defined above. Furthermore, a process is provided for producing ligated polyoxometalates with organo-substituted cationic groups which comprises reacting within an aqueous acidic medium, a polyoxometalate selected from polyoxotungstates and polyoxomolybdates; a ligand-forming compound selected from phosphorus-, antimony, or arsenic-based organo-substituted acids, and organic compounds selected from hydroxycarboxylic acids and dihydroxy compounds, and salts thereof; and an organo-substituted cation-forming compound selected from organonitrogen, organophosphorus, organoarsenic, and organosulfides having secondary or tertiary amine phosphine, arsine, or sulfide groups or a salt thereof and quaternary ammonium, phosphonium, or arsonium salts.

### Detailed Description

Ligated polyoxometalates are provided with high solubility in organic solvents, such as cyclohexane, and norbornene functional monomer formulations used in in-mold bulk polymerization, e.g., RIM, such as blends based on dicyclopentadiene (DCPD). By norbornene functional is meant monomers having at least one norbornene group in the molecule. The catalyst compounds comprise polyoxometalate anions having organo-substituted ligands incorporated therein and organo-substituted onium cations to aid solubility in organic media. These compounds exhibit superior solubility to the prior octamolybdate complexes due to the relatively smaller ring structure, while maintaining the same overall charge and the same number of organo-substituted cations to aid solubility. Therefore, although the cluster size is reduced, solubilization provided by the organo-substituted cations is not lost. The incorporation of ligands into the polyoxometalate anion also allows the addition of organic moieties and heteroatoms which may influence the solubility, stability, and reactivity of the cluster. Smaller polyoxometalates frequently rearrange during synthesis, yielding a range of cluster sizes. The incorporation of ligands stabilizes the polyoxometalate structure.

The ligated polyoxometalates of this invention also exhibit excellent reactivity in in-mold bulk polymerization processes such as in RIM and RTM (reaction transfer molding) systems. Some form catalysts that can provide monomer-to-polymer conversion rates greater than 99%, as determined by thermal gravimetric analysis (TGA) at 400°C. High exotherms (160-220°C), which are necessary for effective RIM manufacturing procedures, are also provided.

The ligated polyoxometalates of this invention may be produced by reacting within an aqueous acidic medium, a polyoxometalate, a ligand-forming compound, and a cation-forming compound selected from organo-nitrogen, phosphorus, arsenic, or sulfur compounds or salts thereof. The reaction components are added to an aqueous medium before the addition of acid. Preferably, the cation-forming compound is not introduced until after the complete dissolution of the ligand-forming compound. The aqueous solution is preferably heated before the addition of acid to aid dissolution of the oxopolymetalate. Suitable acids include inorganic acids, such as hydrochloric acid, nitric acid, sulfuric acid, and the like or mixtures thereof. The amount of acid used may vary widely from about one-half to ten or more molar equivalents of acid per molar equivalent of polyoxometalate. However, one molar equivalent is typically preferred. The acid is preferably metered into the aqueous medium at a slow rate.

Sufficient water is included in the reaction mixture to ensure a consistency which enables it to be easily stirred. Optionally, an organic solvent may be introduced into the aqueous medium to provide a two-phase reaction medium. When utilized, the organic solvent is immiscible in water; and, preferably, the product is soluble therein. Examples include aliphatic solvents such as pentane, hexane, heptane, octane, decane, petroleum ether, and the like. Other examples include aromatic solvents, such as benzene, toluene, naphthalene, xylene, and the like; and chlorinated solvents, such as tetrachloroethane, chlorobenzene, and the like. Watersoluble organic solvents, such as the aliphatic alcohols methanol, ethanol and the like, and ketones, such as acetone, butanone, and the like, can be used if desired. Preferred solvents are selected from the group consisting of benzene, toluene, hexane, heptane, methylene chloride, and cyclohexane.

Where the reaction mixture is heated before the introduction of the inorganic acid, a temperature range of 60-70°C is preferred. After the acid is introduced, the reaction mixture is refluxed for 0.25-16 hours, preferably 1-4 hours, and preferably with stirring. The duration of the reaction depends on the starting materials. After the reaction is complete, the aqueous phase is decanted off. The product collects as a syrup or precipitate at the bottom of the reactor in the absence of organic solvent. This syrup/precipitate (or organic phase) is washed with water. Where a syrup/precipitate is obtained, it is dissolved in an organic solvent (or monomer suitable for RIM formulations) after washing with water.

The organic phase or product/solvent mixture is gently heated to remove all water by azeotropic distillation. If neat product is desired, the solvent is removed, preferably by vacuum distillation. The hexane-water azeotrope boils at about 61.6°C, while hexane only boils at 69°C. The cyclohexane-water azeotrope boils at 69.8°C. The boiling point for cyclohexane alone is about 81°C. The product obtained from these reactions is readily identifiable by elemental, infrared, and NMR analysis.

Molar ratios of the starting materials (polyoxometalate, organoamine, cation-forming compound, and ligand-forming compound) do not influence the nature of the products formed as much as the identity of these starting materials. Incorporation of ligands provide stability of the products formed. Therefore, molar ratios of polyoxometalate/ligand-forming compound/cation-forming compound can range widely within the reaction medium and still provide the desired product.

The ligand-forming compound is preferably a phosphorus compound or a hydroxcarboxylic acid or salt thereof. Other suitable ligand-forming compounds provide ligands based on antimony, sulfur, arsenic and other organic compounds such as dihydroxy compounds. The most preferred ligand-forming compounds are phosphorus compounds selected from the group consisting of organo-substituted phosphonic acids, such as those of the formula R³P(O)(OH)₂; diphosphonic acids, phosphinic acids, such as those of the formula R³P(O)(OH)H; diphosphinic acids, and salts thereof, such as the corresponding organo-substituted sodium phosphinates and sodium phosphonates. Analogous arsonic, arsinic, stibinic, stibonic, sulfinic, and sulfonic acids, their diacids, and salts thereof can be used to profice the corresponding As, Sb, or S ligand. R³ is hydrogen, hydroxy, branched or unbranched, C₁ to C₂₀ alkyl, branched or unbranched carboxyalkyl, branched or unbranched C₁ to C₂₀ hydroxyalkyl, C₅ to C₂₀ cycloalkyl, C₂ to C₂₀ alkenyl, C₆ to C₂₄ aryloxy, C₇ to C₂₄ aralkyl, C₆ to C₂₄ aryl, deprotonated polyols, C₆ to C₂₄ protonated aminoaryl, and C₁-C₂₀ protonated aminoalkyl. Examples of preferred phosphorus compounds include phenyl phosphonic acid, phenyl phosphinic acid, disodium phenylphosphate, deprotonated polyols such as derived from disodium(glycerol)-2-phosphate, 2-carboxyethyl-phosphonic acid, methyl phosphonic acid, aminophenyl phosphonic acid, butyl phosphonic acid, and methylene diphosphonic acid. Analogous arsenic compounds are also preferred.

The polyoxometalates used in the process of this invention comprise the metals tungsten and molybdenum, including Mo^{VI} and Mo^{V}. These compounds can vary widely in composition and structure. Sodium or ammonium salts of these compounds are typically used for the reaction, such as sodium molybdates and sodium tungstates of the formula Na₂MO₄·2H₂O, wherein M is molybdenum or tungsten. Suitable molybdates also include (NH₄)₆Mo₇O₂₄·4H₂O, MoO₃, and (NH₄)₂Mo₂O₇.

The compounds used in the process of this invention to provide the organo-substituted cations include organoamines, organophosphines, organoarsines, and organosulfides. These cation-forming compounds have secondary sulfide and/or tertiary amine, phosphine, or arsine groups and are of the formula R¹ER², wherein R¹ and R² are defined in detail below and E is N, As, P, or S. Salts of the amines are also suitable and typically are of the formula R¹NH(B), wherein B is an anion, preferably chlorine, bromine, nitrate, or sulfate.

The organic moieties on the cation-forming compounds are critical to providing solubility of the resultant products within organic media, such as cyclohexane or hexane as used in solution polymerization or norbornene functional monomer mixtures used in RIM. The cation-forming compounds of nitrogen contain at least 20 carbon atoms to provide adequate solubility within organic media. All of the R¹ and R² radicals cannot be hydrogen since such a condition will render the catalyst essentially insoluble in hydrocarbons and most organic solvents. The cation-forming compounds of arsenic, phosphorus, and sulfur contain at least 16 carbon atoms to provide adequate solubility in organic media Typically, the number of carbon atoms ranges from 20-75 for all cation forming compounds. Functional groups may be introduced to further enhance the solubility of the resultant cation within the specific organic media. Good solubility and cost effectiveness are obtained when R¹ is C₈H₁₇-C₁₈H₃₇ and R² is hydrogen. There is a practical limit to the size of the aliphatic groups in that as they increase in size, the percentage of molybdenum or tungsten content of the resultant product decreases. This may require an increased loading of the product formed when used as a catalyst component in RIM formulations or solution polymerization. Generally, increasing the chain length of the aliphatic hydrocarbons of R increases solubility in organic media. Preferably, each susbtituent contains 10 or more carbon atoms.

While particular attention has been given to the aliphatic radicals of R¹ and R², the substituents within the scope of R¹ and R² also include acyclic, aromatic, and heterocyclic structures, such as where R¹ or R² is cyclohexyl, phenyl, or two of the R¹ substituents form a ring structure. The substituents within the scope of R¹ include radicals which contain functional groups so as to make the cation more lipophilic, providing higher solubility within organic media. Such functional groups include carbonyl-groups, -C(O)-; carbonyl- groups, -C(O)-O-; and hydroxy groups, -OH. The cation-forming compounds utilized may contain additional amine, phosphine or arsine groups, which may be primary, secondary, or tertiary in structure. In addition to tailoring the R substituents to enhance lipophilic properties, its identity may be tailored to provide greater interaction between the resultant cation and the anion.

Commercially available organoamines which are suitable for use in this process include Adogen^{®} 381, (C₈H₁₇)₃N; Adogen^{®} 382, (C₁₀H₂₁)₃N; Alamine^{®} 304 (C₁₂H₂₅)₃N ; Adogen^{®} 340, tri(hydrogenated tallow)amine; (C₁₈H₃₇)_{0.65}(C₁₆H₃₃)_{0.35}- (C₁₄H₂₉)_{0.05}N . Salts of these amines can be easily obtained and are suitable for use in this process. Other specific amines and ammonium salts which are conveniently available include di(tridecyl)amine, tri(octyl)methylammonium chloride, tri(dodecyl)ammonium nitrate, tetrapentylammonium bromide, di(dodecyl)dimethylammonium bromide, and dioctadecylammonium bromide.

The ligated polyoxometalates provided by this invention comprise an onium cation component and a ligated molybdate or tungstate anion component of the formula:

[R¹ ₘER² _{m'}]ₙMₓO_{y}L_{z}

The cation represented by (R¹ₘER²_{m'}) is taken n times, wherein n = 6x-2y-Qz; x and y represent the number of M and O atoms in the anion (to be described below) based on the valence of +6 for molybdenum and tungsten and -2 for oxygen. Q is the charge on the ligand L, and z is 1 to 6. Preferably, the number value of n ranges from 2 to 6, more preferably the number value of n is 2 or 4, and most preferably the value of n is 4. A larger number of cations improves the solubility of the present compounds within organic media due to the higher number of organic moieties present. The cation is preferably an organoammonium cation (E = N) derived from an organoamine having secondary or tertiary amine groups with organic substituents, as described above. Cations based on phosphorus, arsenic, and sulfur (E = P, As, and S) can be used as well. When E is nitrogen, arsenic or phosphorus m is 3 and m' is 1, and when E is sulfur m is 2 and m' is 0.
R¹ is independently selected from branched and unbranched C₁ to C₂₀ alkyl, C₂ to C₂₀ alkenyl, C₅ to C₂₀ cycloalkyl, C₆ to C₂₄ aryl, C₆ to C₂₄ aryloxy, C₇ to C₄₀ alkaryl, and ring structures formed with another R¹ group, including those wherein one or two-CH₂- groups are replaced by functional groups selected from -O-, -C(O)-, -OC(O)-, and -CH(OH)-. Aliphatic substituents having 8 to 18 carbon atoms are preferred. Most preferably, each substituent has at least 10 carbon atoms. Substituents which may be used to enhance the lipophilic nature of the products may also be introduced. For example, additional amine groups or carbonyl groups, carboxyl groups, or hydroxyl groups may be present so as to enhance solubility within the organic solvent of choice.

R² is independently selected from hydrogen or R¹. Preferably, R² is selected from hydrogen, methyl, or aliphatic substituents having 8 to 18 carbon atoms.

When E is nitrogen, the selection of R¹ and R² are subject to the provisos that not more than three of R¹ and R² can be hydrogen, and the sum of all carbon atoms represented by R¹ and R² is at least 20, preferably from 20 to 75, so as to aid solubility, and when E is arsenic, phosphorus, and sulfur, the sum of all carbon atoms on all R¹ and R² radicals is at least 16.

The ligated molybdate and tungstate anion portion of the catalyst component is represented by MₓO_{y}L_{z} wherein M is molybdenum or tungsten, and x, y, and z are as defined above. Numerically, the preferred value of x ranges from 1 to 12, more preferably 2 to 8, and the preferred value of y ranges from 2 to 46, more preferably 8 to 26. The value of z ranges from 1 to 6, preferably 1 to 4.

The ligands represented by L introduce organic functionality to the anion so as to aid solubility within organic media such as the norbornene functional monomers used in the RIM process. These ligands also confer solubility in other organic solvents such as cyclohexane and hexane utilized as organic media in solution polymerization processes.

The ligand incorporates a multivalent atom selected from phosphorus, arsenic, antimony, and sulfur. Phosphorus is preferred because of reduced toxicity. The multivalent atoms can be substituted with organic substituents which will be described below. The organic substituents are significant in that they aid in solubility within organic media. Ligand L is also selected from organic compounds such as deprotonated hydroxycarboxylic acids and deprotonated dihydroxy compounds such as deprotonated hydroxycarboxylates, deprotonated hydroxydicarboxylates, deprotonated hydroxytricarboxylates, and deprotonated dihydroxybenzene.

When the multivalent atom is phosphorus, the ligand is a substituted phosphonate (R³PO₃⁽²⁻⁾) or substituted phosphinate (R³PO₂H⁽⁻⁾) wherein R³ is selected from the group consisting of hydrogen, hydroxy, branched and unbranched C₁ to C₂₀ alkyl, branched and unbranched C₁ to C₂₀ carboxyalkyl, branched and unbranched C₁ to C₂₀ hydroxyalkyl, C₅ to C₂₀ cycloalkyl, C₂ to C₂₀ alkenyl, C₆ to C₂₄ aryl, C₆ to C₂₄ aryloxy, C₇ to C₄₀ aralkyl, deprotonated polyols such as, for example, deprotonated glycerol, (e.g., protons are removed from the hydroxy groups), protonated C₁ to C₂₀ aminoalkyl and protonated C₆ to C₂₄ aminoaryl (e.g., protonated amino = -NH₃⁺).

When the multivalent atom is arsenic, the As atom can be substituted in place of phosphorus in the forgoing formulae.

When L is a deprotonated hydroxycarboxylate, the ligand is selected from substituted and unsubstituted C₆ to C₂₄ aromatic hydroxy acids wherein the hydroxy and carboxy moieties are deprotonated and located on contiguous aromatic ring carbon atoms as exemplified by the following formulae: 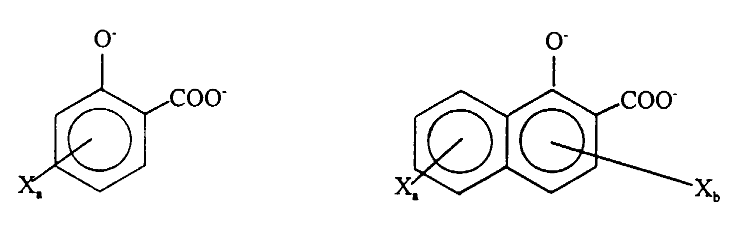 wherein X is independently selected from branched and unbranched C₁ to C₂₀ alkyl and halogen and a is 0-4 and b is 0-2. If X is present it can be taken once or can be taken any number of times about the ring structure. Again it is emphasized that the deprotonated hydroxy and carboxy groups can be located anywhere about the ring(s) so long as they are bonded to contiguous ring carbon atoms. Preferred deprotonated aromatic hydroxyacids are salicylate and substituted salicylates wherein X is methyl or bromine, and deprotonated hydroxynaphthoate derived from 1-hydroxy-2-naphthoic acid, 2-hydroxy-1-naphthoic acid or 3-hydroxy-2-naphthoic acid.

The term deprotonated hydroxyacid is also representative of deprotonated α-hydroxyacids of the following formula: 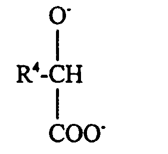 wherein R⁴ is selected from branched and unbranched C₁ to C₂₀ alkyl, preferably C₁ to C₄ alkyl, and most preferably methyl.

The deprotonated hydroxydicarboxylates are represented by the following formula: 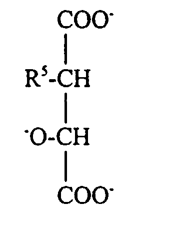 wherein R⁵ is hydrogen, branched and unbranched C₁ to C₂₀ alkyl, C₂ to C₂₀ alkenyl, and C₆ to C₂₄ aryl. Preferably R⁵ is hydrogen. Optionally, one or two of the deprotonated oxygen atoms in the above formula can be protonated.

The deprotonated hydroytricarboxylates are represented by the following formula: 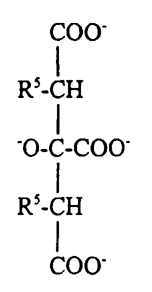 wherein R⁵ is independently selected from radicals as previously defined.

The deprotonated dihydroxy benzene can be represented by the following formula: 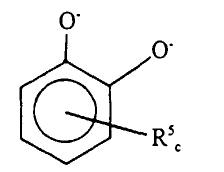 wherein R⁵ is independenly selected from raidcals as previously defined, and c is 0 to 4.

Specific ligated organoammonium polyoxometalates provided by this invention include:
tetrakis[tri(dodecyl)ammonium]di(phenylphospho)pentamolybdate,
tetrakis[tri(isodecyl)ammonium]di(phenylphospho)pentamolybdate,
tetrakis[tri(isooctyl)ammonium]di(phenylphospho)pentamolybdate,
tetrakis[tri(octyl)ammonium]di(phenylphospho)pentamolybdate,
tetrakis[di(dodecyl)ammonium]di(phenylphospho)pentamolybdate,
tetrakis[tri(dodecyl)ammonium]di(phenylphospho)pentatungstate,
tetrakis[tri(dodecyl)ammonium]di(glycerophosphate)pentamolybdate,
tetrakis[tri(dodecyl)ammonium]di(ethylphospho)pentamolybdate,
tetrakis[tri(dodecyl)ammonium]di(methylphospho)pentamolybdate,
di[trikis(dodecyl)ammonium]di(aminophenylphospho)pentamolybdate,
tetrakis[tri(dodecyl)ammonium]di(butylphospho)pentamolybdate.

The norbornene functional monomers that can be polymerized by the catalysts of the present invention are characterized by the presence of at least one norbornene moiety defined structurally as follows:

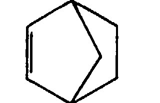

Preferred species are identified by the formulae below: 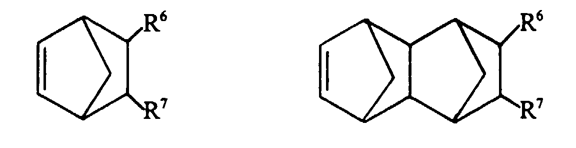 wherein R⁶ and R⁷ are independently selected from hydrogen, C₁ to C₂₀ alkyl, C₂ to C₂₀ alkenyl, C₁ to C₁₀ alkylidenyl, C₆ to C₂₄ aryl, and saturated and unstaturated cyclic groups containing 3 to 12 carbon atoms formed by R⁶ and R⁷ taken together with the ring carbon atoms bonded thereto. It will be noted by those skilled in the art that when R⁶ or R⁷ represents alkylidenyl the bond line between the R⁶ and/or R⁷ substituents and the ring carbon atom bonded thereto represents a double bond.

In accordance with this definition, suitable norbornene functional monomers include substituted and unsubstituted norbornene, dicyclopentadiene, dihydrodicyclopentadiene, symmetical and asymmetrical trimer of cyclopentadiene, oligomers of cyclopentadiene, tetracyclododecene, tetracyclododecadiene, and mixtures thereof.

Preferred substituents on the norbornene functional monomers include C₁ to C₁₀ alkyl, C₂ to C₆ alkenyl, C₆ to C₁₂ aryl and C₁ to C₅ alkylidenyl, more preferably ethylidenyl.

Preferred norbornene functional monomers include dicyclopentadiene, trimers of cyclopentadiene, methyltetracyclododecene, ethylidene norbornene (e.g., 5-ethylidenyl-2-norbornene), vinyl norbornene, 2-norbornene, and other norbornene functional monomers such as 5-methyl-2-norbornene, 5,6-dimethyl-2-norbornene, 5-ethyl-2-norbornene, 5-butyl-2-norbornene, 5-hexyl-2-norbornene, 5-octyl-2-norbornene, and 5-dodecyl-2-norbornene.

In order to obtain thermoset polymers small amounts of crosslinking monomers, e.g., symmetrical trimer of cyclopentadiene and tetracyclododecadiene can be incorporated into the monomer mixture. Other crosslinking type monomers that are useful herein are disclosed in US-A-4,701,510 which is hereby incorporated by reference.

In the in-mold bulk polymerization of norbornene functional monomers, the catalyst component of the present invention and a cocatalyst component are dissolved in separate aliquots of norbomene functional monomer to form two polymerizable reactant feed solutions. Each feed composition is not reactive until mixed with the other. Reactant streams from each of the catalyst and cocatalyst reactant feed solutions are mixed to form a reactive solution which is subsequently conveyed into a mold. A chemical reaction, i.e., via ring-opening metathesis polymerization, occurs in the mold transforming the monomer into a tough, hard thermoset polymer. Optionally, when quicker cycle times are desired, the mold can be preheated before conveying the reactive monomer solution therein. The mold temperature employed is greater than room temperature, preferably above 30°C, more preferably between 40 to 200°C, and most preferably between 50 to 120°C.

Any suitable cocatalyst can be employed so long as it reacts with the catalysts of this invention to produce a polymer product. In in-mold bulk polymerization processes the metathesis catalyst system, i.e., the catalyst and cocatalyst, should be sufficiently active to attain at least 95 percent monomer to polymer conversion. Suitable cocatalysts include organoaluminum and organoaluminum halides such as for example, alkylaluminum compounds and alkylaluminumhalides selected from monoalkylaluminum dihalides, dialkylaluminum monohalides (diethylaluminumchloride), aluminum sesquihalides and trialkylaluminum (triethylaluminum). Other alkylaluminum halides include compounds selected from alkoxyalkylaluminum halides and aryloxyalkylaluminum halides as set forth in US-A-4,426,502 which is hereby incorporated by reference.

A monomer to polymer conversion enhancing agent such as silicon tetrachloride can also be added to the monomer mixture.

The polyoxometalate catalyst components of this invention, or mixtures thereof are employed at a level of 0.01 to 50 millimoles of M atoms (e.g., molybdenum or tungsten per mole of total monomer, and preferably 0.1 to 10 millimoles per mole of total monomer. The molar ratio of the cocatalyst to the catalyst component ranges from 200:1 or more to 1:10, preferably 50:1 to 2:1 of aluminum to the molybdenum and/or tungsten atoms. The heated mold thermally initiates onset of the polymerization reaction.

The properties of the polymer product can be modified by the addition of additives to the monomer composition. The additives can be dissolved or dispersed in at least one of the monomer reactant solutions. Suitable additives include elastomers, antioxidants, UV stabilizers, fillers, flame retardants, lubricants, fragrances, pigments, foaming agents, and the like. The invention is not limited to a two reactant stream process. A third reactant stream (or a plurality of streams) containing additional reactants or additives can be employed in the process.

In the foregoing and in the following examples, all temperatures are set forth uncorrected in degrees Celsius; and, unless otherwise indicated, all parts and percentages are by weight.

### EXAMPLES

### Syntheses of Ligated Polyoxometalates

### Example 1

Sodium molybdate, Na₂MoO₄·2H₂O (25.0 g), was dissolved in deionized water (50.0 g), and phenylphosphonic acid, C₆H₅P(O)(OH)₂ (6.53 g), was also dissolved in deionized water (50.0 g). The two solutions were combined in a 500 mL round-bottom flask fitted with a water-cooled condenser and heating mantle. Tridodecylammonium nitrate (48.34 g) was then added. The mixture was warmed and dilute hydrochloric acid (16.0 g concentrated HCl plus 100.0 g deionized water) was added slowly to the phosphonic acid/molybdate/amine salt solution with stirring. The mixture was heated to reflux, with stirring, for 2 hours and then allowed to cool to room temperature. A dark green syrup collected at the bottom of the flask, and the aqueous phase was decanted from the syrup and discarded. The syrup was rinsed twice with deionized water, cyclohexane (250.0 g) was added, and the reactor was fitted with a Dean-Stark trap. The solution was heated to reflux and continued until all water had been removed by azeotropic distillation. The remaining solvent was removed by vacuum distillation. The syrup obtained was readily soluble in hexane and dicyclopentadiene, and the infrared spectrum was consistent with the structure [(C₁₂H₂₅)₃NH]₄{(C₆H₅P)₂Mo₅O₂₁}.

### Example 2

Sodium molybdate, Na₂MoO₄·2H₂O (100.0 g), was dissolved in deionized water (400.0 g), and phenylphosphonic acid, C₆H₅P(O)(OH)₂ (26.12 g), was also dissolved in deionized water (100.0 g). The two solutions were combined in a 2 L round-bottom flask fitted with a water-cooled condenser and heating mantle. Tridodecylammonium nitrate (193.4 g) was then added. The mixture was warmed and dilute sulfuric acid (25.33 g concentrated H₂SO₄ plus 50.0 g deionized water) was added slowly to the phosphonic acid/molybdate/amine salt solution with stirring. The mixture was heated to reflux, with stirring, for 90 minutes and then allowed to cool to room temperature. A dark green syrup collected at the bottom of the flask, and the aqueous phase was decanted from the syrup and discarded. The syrup was rinsed twice with deionized water, hexane (250.0 g) was added, and the reactor was fitted with a Dean-Stark trap. The solution was heated to reflux and continued until all water had been removed by azeotropic distillation. The remaining solvent was removed by vacuum distillation. The dark green syrup obtained was readily soluble in hexane and dicyclopentadiene, and the infrared spectrum was consistent with the structure [(C₁₂H₂₅)₃NH]₄{(C₆H₅P)₂Mo₅O₂₁}.

### Example 3

The procedure of Example 2 was essentially followed utilizing the amine, tri(i-decyl)amine.

Sodium molybdate, Na₂MoO₄·2H₂O (100.0 g), was dissolved in deionized water (450.0 g), and phenylphosphonic acid, C₆H₅P(O)(OH)₂ (26.12 g), was also dissolved in deionized water (75 g). The two solutions were combined in a 2 L round-bottom flask fitted with a water-cooled condenser and heating mantle. Tri(idecyl)amine (147.14 g) was then added. The mixture was warmed and dilute sulfuric acid (42.22 g concentrated H₂SO₄ plus 150.0 g deionized water) was added slowly to the phosphonic acid/molybdate/amine solution with stirring. The mixture was heated to reflux, with stirring, for 3 hours and then allowed to cool to room temperature. A dark blue syrup collected at the bottom of the flask, and the aqueous phase was decanted from the syrup and discarded. The syrup was rinsed twice with deionized water, hexane (200.0 g) was added, and the reactor was fitted with a Dean-Stark trap. The solution was heated to reflux, which was continued until all water had been removed by azeotropic distillation. The remaining solvent was removed by vacuum distillation. The dark blue syrup obtained was readily soluble in hexane and dicyclopentadiene, and the infrared spectrum was consistent with the structure [(i-C₁₀H₂₁)₃NH]₄{(C₆H₅P)₂Mo₃O₂₁}.

### Example 4

The procedure of Example 2 as essentially followed utilizing the amine tri(i-octyl)amine and a mixture of hexane/cyclohexane extraction solvent.

Sodium molybdate, Na₂MoO₄·2H₂O (100.0 g), was dissolved in deionized water (400.0 g), and phenylphosphonic acid, C₆H₅P(O)(OH)₂ (26.14 g), was also dissolved in deionized water (100.0 g). The two solutions were combined in a 2 L round-bottom flask fitted with a water-cooled condenser and heating mantle. Tri(i-octyl)amine (117.38 g) was then added. The mixture was warmed and dilute sulfuric acid (42.22 g concentrated H₂SO₄ plus 150.0 g deionized water) was added slowly to the phosphonic acid/molybdate/amine solution with stirring. The mixture was heated to reflux, with stirring, for 3 hours and then allowed to cool to room temperature. A dark blue syrup collected at the bottom of the flask, and the aqueous phase was decanted from the syrup and discarded. The syrup was rinsed twice with deionized water, a blend of hexane (250.0 g) and cyclohexane (175.0 g) was added, and the reactor was fitted with a Dean-Stark trap. The solution was heated to reflux, which was continued until all water had been removed by azeotropic distillation. The remaining solvent was removed by vacuum distillation. The dark blue-green syrup obtained was readily soluble in cyclohexane and hot hexane. The infrared spectrum was consistent with the structure [(i-C₈H₁₇)₃NH]₄{(C₆H₅P)₂Mo₅O₂₁}.

### Example 5

The procedure of Example 2 was essentially followed utilizing the amine salt, tri(octyl)methylammonium chloride, and a cyclohexane extraction solvent.

Sodium molybdate, Na₂MoO₄·2H₂O (100.0 g), was dissolved in deionized water (400.0 g), and phenylphosphonic acid, C₆H₅P(O)(OH)₂ (26.12 g), was also dissolved in deionized water (100.0 g). The two solutions were combined in a 2 L round-bottom flask fitted with a water-cooled condenser and heating mantle. Tri(i-octyl)methylammonium chloride (133.64 g) was then added. The mixture was warmed and dilute sulfuric acid (25.33 g concentrated H₂SO₄ plus 100.0 g deionized water) was added slowly to the phosphonic acid/molybdate/quaternary ammonium salt solution with stirring. The mixture was heated to reflux, with stirring, for 3 hours and then allowed to cool to room temperature. A dark green syrup collected at the bottom of the flask, and the aqueous phase was decanted from the syrup and discarded. The syrup was rinsed twice with deionized water, cyclohexane (300.0 g) was added, and the reactor was fitted with a Dean-Stark trap. The solution was heated to reflux, which was continued until all water had been removed by azeotropic distillation. The remaining solvent was removed by vacuum distillation. The dark syrup obtained was soluble in cyclohexane and and dicyclopentadiene, and the infrared spectrum was consistent with the structure [(C₈H₁₇)₃NCH₃]₄{(C₆H₅P)₂Mo₅O₂₁}.

### Example 6

The procedure of Example 2 was essentially followed utilizing the amine di(tridecyl)amine.

Sodium molybdate, Na₂MoO₄·2H₂O (100.0 g), was dissolved in deionized water (400.0 g), and phenylphosphonic acid, C₆H₅P(O)(OH)₂ (26.12 g), was also dissolved in deionized water (100.0 g). The two solutions were combined in a 2 L round-bottom flask fitted with a water-cooled condenser and heating mantle. Di(tridodecyl)amine (129.75 g) was then added. The mixture was warmed and dilute sulfuric acid (42.22 g concentrated H₂SO₄ plus 150.0 g deionized water) was added slowly to the phosphonic acid/molybdate/amine mixture with stirring. The mixture was heated to reflux, with stirring, for 3 hours and then allowed to cool to room temperature. A dark blue solid "cake" formed at the bottom of the flask, and the aqueous phase was decanted from the syrup and discarded. The solid was rinsed twice with deionized water, and a mixture of cyclohexane (150.0 g) and hexane (100g) was added. The reactor was fitted with a Dean-Stark trap, and the solution was heated to reflux and solvents were removed by vacuum distillation. The dark blue solid obtained was soluble in cyclohexane. Proposed structure: [(C₁₃H₂₇)₂NH₂]₄{(C₆H₅P)₂Mo₅O₂₁}.

### Example 7

Tri(hydrogenated tallow)amine was used in this example.

Sodium molybdate, Na₂MoO₄·2H₂O (16.02 g), was dissolved in deionized water (100.0 g), and phenylphosphonic acid, C₆H₅P(O)(OH)₂ (4.19 g), was also dissolved in deionized water (50.0 g). The two solutions were combined in an 1 L round-bottom flask fitted with a water-cooled condenser and heating mantle. Tri(hydrogenated tallow)amine (Adogen^{®} 340, 40.0 g) was then added. The mixture was warmed and dilute sulfuric acid (6.77 g concentrated H₂SO₄ plus 50.0 g deionized water) was added slowly to the phosphonic acid/molybdate/amine suspension with stirring. The mixture was heated to reflux, with stirring, for 4 hours and then allowed to cool to room temperature. A dark blue solid "cake" formed at the bottom of the flask, and the aqueous phase was decanted from the solid and discarded. The solid was rinsed twice with deionized water, hexane (150.0 g) was added, and the reactor was fitted with a Dean-Stark trap. The solution was heated to reflux and continued until all water had been removed by azeotropic distillation. The remaining solvent was removed by vacuum distillation. The dark blue solid obtained was soluble in cyclohexane, hexane, and dicyclopentadiene, and the infrared spectrum was consistent with the structure [(C₁₈H₃₇)_{0.65}C₁₆H₃₃)_{0.35}(C₁₄H₂₉)_{0.05}NH]₄{(C₆H₅P)₂Mo₅O₂₁} (approximate ratios C₁₄:C₁₆:C₁₈).

### Example 8

The procedure of Example 2 was essentially followed utilizing a different phosphonic acid (t-butyl phosphonic acid).

Sodium molybdate, Na₂MoO₄·2H₂O (21.90 g), was dissolved in deionized water (100.0 g), and t-butylphosphonic acid, (CH₃)₃CP(O)(OH)₂(5.0 g), was also dissolved in deionized water (50.0 g). The two solutions were combined in an 1 L round-bottom flask fitted with a water-cooled condenser and heating mantle. Tridodecylamine (37.80 g) was then added. The mixture was warmed and dilute sulfuric acid (9.25 g concentrated H₂SO₄ plus 50.0 g deionized water) was added slowly to the phosphonic acid/molybdate/amine suspension with stirring. The mixture was heated to reflux, with stirring, for 3.5 hours and then allowed to cool to room temperature. A dark green syrup collected at the bottom of the flask, and the aqueous phase was decanted from the solid and discarded. The solid was rinsed twice with deionized water, a mixture of hexane (40.0 g) cyclohexane (100.0 g) was added, and the reactor was fitted with a Dean-Stark trap. The solution was heated to reflux which was continued until all water had been removed by azeotropic distillation. The remaining solvents were removed by vacuum distillation. The dark blue solid obtained was soluble in cyclohexane/hexane mixture. Proposed structure: [(C₁₂H₂₅)₃NH]₄{(CH₃)₃CP)₂Mo₅O₂₁}.

### Example 9

The tungstate was formed from a sodium tungstate utilizing the same phosphonic acid and ammonium nitrate of Example 2.

Sodium tungstate, Na₂WO₄·2H₂O (50.0 g), was dissolved in deionized water (200.0 g), and phenylphosphonic acid, C₆H₅P(O)(OH)₂ (9.59 g), was also dissolved in deionized water (100.0 g). The two solutions were combined in an 1 L round-bottom flask fitted with a water-cooled condenser and heating mantle. Tridodecylammonium nitrate (70.94 g) was then added. The mixture was warmed and dilute sulfuric acid (9.29 g concentrated H₂SO₄ plus 100.0 g deionized water) was added slowly to the phosphonic acid/tungstate/amine salt solution with stirring. The mixture was heated to reflux, with stirring, for 3.5 hours and then allowed to cool to room temperature. A yellow-amber syrup collected at the bottom of the flask, and the aqueous phase was decanted from the syrup and discarded. The syrup was rinsed twice with deionized water, hexane (150.0 g) was added, and the reactor was fitted with a Dean-Stark trap. The solution was heated to reflux which was continued until all water had been removed by azeotropic distillation. The remaining solvent was removed by vacuum distillation. The amber-colored syrup obtained was soluble in hexane and dicyclopentadiene. Proposed structure: [(C₁₂H₂₅)₃NH]₄{(C₆H₅P)₂W₅O₂₁}.

### Example 10

The procedure of Example 2 was essentially repeated utilizing tridodecylamine instead of the salt thereof.

Sodium molybdate, Na₂MoO₄·2H₂O (100.0 g), was dissolved in deionized water (400.0 g), and phenylphosphonic acid, C₆H₅P(O)(OH)₂ (26.12 g), was also dissolved in deionized water (100.0 g). The two solutions were combined in a 2 L round-bottom flask fitted with a water-cooled condenser and heating mantle. Tridodecylamine (172.56 g) was then added. The mixture was warmed and dilute sulfuric acid (42.22 g concentrated H₂SO₄ plus 100.0 g deionized water) was added slowly to the phosphonic acid/molybdate/amine mixture with stirring. The mixture was heated to reflux, with stirring, for 3 hours and then allowed to cool to room temperature. A dark green syrup collected at the bottom of the flask, and the aqueous phase was decanted from the syrup and discarded. The syrup was rinsed twice with deionized water, hexane (250.0 g) was added, and the reactor was fitted with a Dean-Stark trap. The solution was heated to reflux and continued until all water had been removed by azeotropic distillation. The remaining hexane was removed by vacuum distillation. The dark green syrup obtained was readily soluble in hexane and dicyclopentadiene, and the infrared spectrum was consistent with the structure [(C₁₂H₂₅)₃NH]₄{(C₆H₅P)₂Mo₅O₂₁}.

### Example 11

The procedure of Example 10 was essentially followed utilizing a different acid, phenylphosphinic acid.

Sodium molybdate, Na₂MoO₄·2H₂O (100.0 g), was dissolved in deionized water (400.0 g), and phenylphosphinic acid, C₆H₅P(O)(OH)(H) (23.49 g), was also dissolved in deionized water (75 g). The two solutions were combined in a 2 L round-bottom flask fitted with a water-cooled condenser and heating mantle. Tridodecylamine (172.56 g) was then added. The mixture was warmed and dilute sulfuric acid (42.22 g concentrated H₂SO₄ plus 100.0 g deionized water) was added slowly to the phosphinic acid/molybdate/amine mixture with stirring. The mixture was heated to reflux, with stirring, for 3.5 hours and then allowed to cool to room temperature. A dark blue syrup collected at the bottom of the flask, and the aqueous phase was decanted from the syrup and discarded. The syrup was rinsed twice with deionized water, hexane (350.0 g) was added, and the reactor was fitted with a Dean-Stark trap. The solution was heated to reflux, which was continued until all water had been removed by azeotropic distillation. The remaining hexane was removed by vacuum distillation. The dark green syrup obtained was readily soluble in hexane and dicyclopentadiene.

### Example 12

The procedure of Example 10 was essentially followed utilizing a phosphate disodiumphenylphosphate instead of phenylphosphonic acid.

Sodium molybdate, Na₂MoO₄·2H₂O (50.0 g), was dissolved in deionized water (400.0 g), and disodiumphenylphosphate, C₆H₅OP(O)(ONa)₂·2H₂O (21.0 g), was also dissolved in deionized water (100.0 g). The two solutions were combined in an 1 L round-bottom flask fitted with a water-cooled condenser and heating mantle. Tridodecylamine (86.3 g) was then added. The mixture was warmed and dilute sulfuric acid (29.56 g concentrated H₂SO₄ plus 100.0 g deionized water) was added slowly to the phosphonate/molybdate/amine mixture with stirring. The mixture was heated to reflux, with stirring, for 3 hours and then allowed to cool to room temperature. A dark blue syrup collected at the bottom of the flask, and the aqueous phase was decanted from the syrup and discarded. The syrup was rinsed twice with deionized water, hexane (225 g) was added, and the reactor was fitted with a Dean-Stark trap. The solution was heated to reflux and continued until all water had been removed by azeotropic distillation. The remaining hexane was removed by vacuum distillation. The dark blue syrup obtained was readily soluble in hexane and dicyclopentadiene. Proposed structure: [(C₁₂H₂₅)₃NH]₄{(C₆H₅OP)₂Mo₅O₂₁}.

### Example 13

The procedure of Example 10 was essentially followed, replacing the phenylphosphonic acid with disodium(glycerol-2-phosphate).

Sodium molybdate, Na₂MoO₄·2H₂O (50.0 g), was dissolved in deionized water (200.0 g), and disodium(glycerol-2-phosphate), (HOCH₂CHOP(O)(ONa)₂ (21.0 g), was also dissolved in deionized water (100.0 g). The two solutions were combined in an 1 L round-bottom flask fitted with a water-cooled condenser and heating mantle. Tridodecylamine (86.3 g) was then added. The mixture was warmed and dilute sulfuric acid (29.6 g concentrated H₂SO₄ plus 100.0 g deionized water) was added slowly to the phosphate/molybdate/amine mixture with stirring. The mixture was heated to reflux, with stirring, for 3 hours and then allowed to cool to room temperature. A dark blue syrup collected at the bottom of the flask, and the aqueous phase was decanted from the syrup and discarded. The syrup was rinsed twice with deionized water, hexane (225 g) was added, and the reactor was fitted with a Dean-Stark trap. The solution was heated to reflux, which was continued until all water had been removed by azeotropic distillation. The remaining solvent was removed by vacuum distillation. The dark blue syrup obtained was readily soluble in hexane and dicyclopentadiene. Proposed structure: [(C₁₂H₂₅)₃NH]₄{[(HOCH₂)₂CHOP)]₂Mo₅O₂₁}.

### Example 14

The phosphonic acid used in this example was 2-carboxyethylphosphonic acid.

Sodium molybdate, Na₂MoO₄·2H₂O (38.87 g), was dissolved in deionized water (150.0 g), and 2-carboxyethylphosphonic acid HOC(O)CH₂P(O)(OH)₂ (9.9 g), was also dissolved in deionized water (75 g). The two solutions were combined in a 1 L round-bottom flask fitted with a water-cooled condenser and heating mantle. Tridodecylamine (67.09 g) was then added. The mixture was warmed and dilute sulfuric acid (16.41 g concentrated H₂SO₄ plus 100.0 g deionized water) was added slowly to the phosphonic acid/molybdate/amine mixture with stirring. The mixture was heated to reflux, with stirring, for 2 hours and then allowed to cool to room temperature. A dark green syrup collected at the bottom of the flask, and the aqueous phase was decanted from the syrup and discarded. The syrup was rinsed twice with deionized water, hexane (225 g) was added, and the reactor was fitted with a Dean-Stark trap. The solution was heated to reflux, which was continued until all water had been removed by azeotropic distillation. The remaining hexane was removed by vacuum distillation. Proposed structure: [C₁₂H₂₅NH]₄{[HOC(O)CH₂CH₂P]₂Mo₅O₂₁]}.

### Example 15

The procedure of Example 10 was essentially followed utilizing a different phosphonic acid, methylphosphonic acid.

Sodium molybdate, Na₂MoO₄·2H₂O (32.38 g), was dissolved in deionized water (100.0 g), and methylphosphonic acid, CH₃CP(O)(OH)₂ (5.14 g), was also dissolved in deionized water (50.0 g). The two solutions were combined in a 1 L round-bottom flask fitted with a water-cooled condenser and heating mantle. Tridodecylamine (55.89 g) was then added. The mixture was warmed and dilute sulfuric acid (13.67 g concentrated H₂SO₄ plus 75 g deionized water) was added slowly to the phosphonic acid/molybdate/amine suspension with stirring. The mixture was heated to reflux, with stirring, for 3 hours and then allowed to cool to room temperature. A dark blue-green syrup collected at the bottom of the flask, and the aqueous phase was decanted from the solid and discarded. The solid was rinsed twice with deionized water, hexane (200.0 g) was added, and the reactor was fitted with a Dean-Stark trap. The solution was heated to reflux and continued until all water had been removed by azeotropic distillation. The remaining solvent was removed by vacuum distillation. The dark blue-green syrup obtained was soluble in cyclohexane and hot hexane. Proposed structure: [(C₁₂H₂₅)₃NH]₄{(CH₃P)₂Mo₅O₂₁}.

### Example 16

The procedure of Example 10 was essentially followed utilizing animophenylphosphonic acid instead of phenylphosphonic acid.

Sodium molybdate, Na₂MoO₄·2H₂O (20.37 g), was dissolved in deionized water (150.0 g), and aminophenylphosphonic acid, H₂NC₆H₄P(O)(OH)₂ (5.83 g), was suspended in deionized water (50.0 g). The two solutions were combined in an 1 L round-bottom flask fitted with a water-cooled condenser and heating mantle. Tridodecylamine (17.58 g) was then added. The mixture was warmed and dilute sulfuric acid (8.64 g concentrated H₂SO₄ plus 50.0 g deionized water) was added slowly to the suspension with stirring. The mixture was heated to reflux, with stirring, for 2 hours and then allowed to cool. A dark blue-green semi-solid cake formed at the bottom of the flask, and the aqueous phase was decanted. The solid was rinsed twice with deionized water, hexane (150.0 g) was added, and the reactor was fitted with a Dean-Stark trap. The solution was heated to reflux, which was continued until all water had been removed by azeotropic distillation. The remaining solvent was removed by vacuum distillation. The dark blue-green syrup obtained was soluble in cyclohexane and hexane. Proposed structure: [(C₁₂H₂₅)₃NH]₂{(H₃NC₆H₄P)₂Mo₅O₂₁}.

### Example 17

The procedure of Example 10 was essentially repeated utilizing a different phosphonic acid, butylphosphonic acid.

Sodium molybdate, Na₂MoO₄·2H₂O (22.60 g), was dissolved in deionized water (100.0 g), and butylphosphonic acid, C₄H₉P(O)(OH)₂ (5.16 g), was also dissolved in deionized water (50.0 g). The two solutions were combined in an 1 L round-bottom flask fitted with a water-cooled condenser and heating mantle. Tridodecylamine (39.0 g) was then added. The mixture was warmed and dilute sulfuric acid (9.55 g concentrated H₂SO₄ plus 75 g deionized water) was added slowly to the phosphonic acid/molybdate/amine suspension with stirring. The mixture was heated to reflux, with stirring, for 3 hours and then allowed to cool to room temperature. A dark blue-green syrup collected at the bottom of the flask, and the aqueous phase was decanted from the syrup and discarded. The syrup was rinsed twice with deionized water, hexane (200.0 g) was added, and the reactor was fitted with a Dean-Stark trap. The solution was heated to reflux and continued until all water had been removed by azeotropic distillation. The remaining solvent was removed by vacuum distillation. The dark blue-green syrup obtained was readily soluble in cyclohexane and hot hexane. Proposed structure [(C₁₂H₂₅)₃NH]₄{(C₄H₉P)₂Mo₅O₂₁}.

### Example 18

The procedure of Example 10 was essentially followed utilizing the phosphonic acid methylenediphosphonic acid.

Sodium molybdate, Na₂MoO₄^{.}2H₂O (7.7 g), was dissolved in deionized water (75 g), and methylenediphosphonic acid, CH₂[P(O)(OH)₂]₂ (1.13 g), was also dissolved in deionized water (50.0 g). The two solutions were combined in a 500 ml round-bottom flask fitted with a water-cooled condenser and heating mantle. Tridodecylamine (13.41 g) was then added. The mixture was warmed and dilute sulfuric acid (3.28 g concentrated H₂SO₄ plus 50.0 g deionized water) was added slowly to the diphosphonic acid/molybdate/amine suspension with stirring. The mixture was heated to reflux, with stirring, for 90 minutes and then allowed to cool to room temperature. A green syrup collected at the bottom of the flask, and the aqueous phase was decanted from the syrup and discarded. The solid was rinsed twice with deionized water, hexane (200.0 g) was added, and the reactor was fitted with a Dean-Stark trap. The solution was heated to reflux and continued until all water had been removed by azeotropic distillation. The remaining solvent was removed by vacuum distillation. The green syrup obtained was soluble in hexane.

### Example 19

Ammonium heptamolybdate, (NH₄)₆Mo₇O₂₄^{.}4H₂O (100.0 g), was dissolved in deionized water (500.0 g), and phenylphosphonic acid, C₆H₅P(O)(OH)₂ (35.82 g), was also added to the heptamolybdate solution. The solution was tranferred to a 2 L round-bottom flask fitted with a water-cooled condenser and heating mantle. Tridodecylamine (236.5 g) was then added. The mixture was warmed and dilute sulfuric acid (24.80 g concentrated H₂SO₄ plus 150.0 g deionized water) was added slowly to the phosphonic acid/molybdate/amine solution with stirring. The mixture was heated to reflux, with stirring, for 90 minutes and then allowed to cool to room temperature. A dark green syrup collected at the bottom of the flask, and the aqueous phase was decanted from the syrup and discarded. The syrup was rinsed twice with deionized water, hexane (250.0 g) was added, and the reactor was fitted with a Dean-Stark trap. The solution was heated to reflux and continued until all water had been removed by azeotropic distillation. The remaining solvent was removed by vacuum distillation. The dark green syrup obtained was readily soluble in hexane and dicyclopentadiene, and the infrared spectrum was consistent with the structure [(C₁₂H₂₅)₃NH]₄{(C₆H₅P)₂Mo₅O₂₁}.

### Example 20

Ammonium heptamolybdate, (NH₄)₆Mo₇O₂₄·4H₂O (50.0 g), was dissolved in deionized water (300.0 g), and phosphorus acid, H₃PO₃ (9.29 g), was then added to the heptamolybdate solution. The solution was tranferred to an 1 L round-bottom flask fitted with a water-cooled condenser and heating mantle. Tridodecylamine (118.45 g) was then added. The mixture was warmed and dilute sulfuric acid (12.40 g concentrated H₂SO₄ plus 100.0 g deionized water) was added slowly to the phosphorus acid/heptamolybdate/amine suspension with stirring. The mixture was heated to reflux, with stirring, for 5 hours and then allowed to cool to room temperature. A dark blue-green syrup collected at the bottom of the flask, and the aqueous phase was decanted from the solid and discarded. The solid was rinsed twice with deionized water, hexane (200.0 g) was added, and the reactor was fitted with a Dean-Stark trap. The solution was heated to reflux and continued until all water had been removed by azeotropic distillation. The remaining solvent was removed by vacuum distillation. The dark blue-green syrup obtained was soluble in cyclohexane and hexane. Proposed structure: [(C₁₂H₂₅)₃NH]₄{(HP)₂Mo₅O₂₁}.

### Example 21

Sodium molybdate Na₂MoO₄·2H₂O (100.0 g), was dissolved in deionized water (400.0 g), and phenylphosphonic acid, C₆H₅P(O)(OH)₂ (26.12 g), was also dissolved in deionized water (100.0 g). The two solutions were combined in a 2 L round-bottom flask fitted with a water-cooled condenser and heating mantle. Di(tridecyl)amine (129.75 g) was then added. The mixture was warmed and dilute sulfuric acid (42.2 g concentrated H₂SO₄ plus 150.0 g deionized water) was added slowly to the phosphonic acid/molybdate/amine mixture with stirring. The mixture was heated to reflux, with stirring, for 3 hours and then allowed to cool to room temperature. A dark blue solid "cake" formed at the bottom of the flask, and the aqueous phase was decanted from the syrup and discarded. The solid was rinsed twice with deionized water, and a mixture of cyclohexane (150.0 g) and hexane (100.0 g) was added. The reactor was fitted with a Dean-Stark trap and the solution was heated to reflux and continued until all water had been removed by azeotropic distillation. The remaining solvents were removed by vacuum distillation. The dark blue solid obtained was soluble in cyclohexane. Proposed structure [(C₁₃H₂₇)₂NH₂]₄{(C₆H₅P)₂Mo₅O₂₁}.

### Example 22

Ammonium heptamolybdate, (NH₄)₆Mo₇O₂₄·4H₂O (100.0 g), was dissolved in deionized water (600.0 g), and lactic acid, CH₃CH(OH)(COOH) (30.01 g of 85 percent solution in H₂O plus 100.0 grams of additional H₂O) was then added to the heptamolybdate solution. The solution was tranferred to a 2 L round-bottom flask fitted with a water-cooled condenser and heating mantle. Tridodecylamine (295.7 g) was then added. The mixture was warmed and dilute sulfuric acid (24.79 g concentrated H₂SO₄ plus 75 g deionized water) was added slowly to the lactic acid/molybdate/amine suspension with stirring. The mixture was heated to reflux, with stirring, for 5 hours and then allowed to cool to room temperature. A dark blue-green syrup collected at the bottom of the flask, and the aqueous phase was decanted from the solid and discarded. The solid was rinsed twice with deionized water, hexane (500.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Approximate structure: [(C₁₂H₂₅)₃NH]₄{[CH₃CH(O)(COO)]₂Mo₄O₁₂}.

### Example 23

Molybdenum trioxide, MoO₃ (50.0 g) was suspended in a solution of deionized water (400.0 g), and lactic acid, CH₃CH(OH)(COOH) (18.41 g of 85 percent solution in H₂O). The solution was tranferred to an 1 L round-bottom flask fitted with a water-cooled condenser and heating mantle. Tridodecylamine (181.36 g) was then added and the mixture was heated to reflux, with stirring, for 6 hours and then allowed to cool to room temperature. A dark blue-green syrup collected at the bottom of the flask and the aqueous phase was decanted from the solid and discarded. The solid was rinsed twice with deionized water, hexane (250.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Approximate structure: [(C₁₂H₂₅)₃NH]₂{[CH₃CH(O)(COO)]₂Mo₂O₅}.

### Example 24

Sodium molybdate Na₂MoO₄·2H₂O (24.20 g), was dissolved in deionized water (300.0 g), and salicylic acid, 1,2-C₆H₄(OH)(COOH) (27.63 g), was then added to the molybdate solution. The solution was transferred to an 1 L round-bottom flask fitted with a water-cooled condenser and heating mantle. Tridodecylamine (104.42 g) was then added. The mixture was warmed and dilute sulfuric acid (10.22 g concentrated H₂SO₄ plus 50.0 g deionized water) was added slowly to the salicylic acid/ molybdate/amine suspension with stirring. The mixture was heated to reflux, with stirring, for 3 hours and then allowed to cool to room temperature. A dark green syrup collected at the bottom of the flask, and the aqueous phase was decanted from the syrup and discarded. The solid was rinsed twice with deionized water, hexane (250.0 g) was added and the reactor was fitted with a Dean-Stark trap. The the solution was heated to reflux and continued until all water had been removed by azeotropic distillation. The remaining solvents were removed by vacuum distillation. The dark blue-green syrup was soluble in cyclohexane and hexane. Approximate structure [(C₁₂H₂₅)₃NH]₂{[C₆H₄(O)(COO)]₂Mo₂O₅}.

### Example 25

Ammonium heptamolybdate, (NH₄)₆Mo₇O₂₄·4H₂O (25.0 g), was dissolved in deionized water (300.0 g), and salicylic acid, 1,2-C₆H₄(OH)(COOH) (19.56 g) was then added to the heptamolybdate solution. The solution was tranferred to an 1 L round-bottom flask fitted with a water-cooled condenser and heating mantle. Tridodecylamine (73.92 g) was then added. The mixture was warmed and dilute sulfuric acid (6.20 g concentrated H₂SO₄ plus 50.0 g deionized water) was added slowly to the salicylic acid/molybdate/amine suspension with stirring. The mixture was heated to reflux, with stirring, for 3 hours and then allowed to cool to room temperature. A dark green syrup collected at the bottom of the flask, and the aqueous phase was decanted from the solid and discarded. The solid was rinsed twice with deionized water, hexane (250.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Approximate structure: [(C₁₂H₂₅)₃NH]₂{[C₆H₄(O)(COO)]₂Mo₂O₅}.

### Example 26

Ammonium heptamolybdate, (NH₄)₆Mo₇O₂₄^{.}4H₂O (50.0 g) was dissolved in deionized water (300.0 g), and salicylic acid, 1,2-C₆H₄(OH)(COOH) (19.58 g) was then added to the heptamolybdate solution. The solution was tranferred to an 1 L round-bottom flask fitted with a water-cooled condenser and heating mantle. Tridodecylamine (148.0 g) was then added. The mixture was warmed and dilute sulfuric acid (12.41 g concentrated H₂SO₄ plus 500 g deionized water) was added slowly to the salicylic acid/molybdate/amine suspension with stirring. The mixture was heated to reflux, with stirring, for 3 hours and then allowed to cool to room temperature. A dark green syrup collected at the bottom of the flask, and the aqueous phase was decanted from the solid and discarded. The solid was rinsed twice with deionized water, hexane (250.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Approximate structure: [(C₁₂H₂₅)₃NH]₄{[C₆H₄(O)(COO)]₂Mo₄O₁₂}.

### Example 27

Ammonium heptamolybdate, (NH₄)₆Mo₇O₂₄·4H₂O (25.0 g) was dissolved in deionized water (300.0 g) and tranferred to an 1 L round-bottom flask fitted with a water-cooled condenser and heating mantle. 1-hydroxy-2-naphthoic acid, C₁₀H₆(OH)(COOH) (26.65 g) was then added to the heptamolybdate solution. Tridodecylamine (73.92 g) was then added. The mixture was warmed and dilute sulfuric acid (6.20 g concentrated H₂SO₄ plus 50.0 g deionized water) was added slowly to the 1-hydroxy-2-naphthoic acid/molybdate/amine suspension with stirring. The mixture was heated to reflux, with stirring, for 3 hours and then allowed to cool to room temperature. A dark green syrup collected at the bottom of the flask, and the aqueous phase was decanted from the solid and discarded. The solid was rinsed twice with deionized water, hexane (290.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Approximate structure: [(C₁₂H₂₅)₃NH]₂{[C₁₀H₆(O)(COO)]₂Mo₂O₅}.

### Example 28

Ammonium heptamolybdate, (NH₄)₆Mo₇O₂₄·4H₂O (25.0 g) was dissolved in deionized water (300.0 g) and tranferred to an 1 L round-bottom flask fitted with a water-cooled condenser and heating mantle. 4-methylsalicylic acid, CH₃C₆H₃(OH)(COOH) (21.54 g) was then added to the heptamolybdate solution. Tridodecylamine (73.92 g) was then added. The mixture was warmed and dilute sulfuric acid (6.20 g concentrated H₂SO₄ plus 50.0 g deionized water) was added slowly to the methylsalicylic acid/molybdate/amine suspension with stirring. The mixture was heated to reflux, with stirring, for 3 hours and then allowed to cool to room temperature. A dark green syrup collected at the bottom of the flask and the aqueous phase was decanted from the solid and discarded. The solid was rinsed twice with deionized water, hexane (290.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Approximate structure: [(C₁₂H₂₅)₃NH]₂{[CH₃C₆H₃(O)(COO)]₂Mo₂O₅}.

### Example 29

Ammonium heptamolybdate, (NH₄)₆Mo₇O₂₄·4H₂O (6.24 g) was dissolved in deionized water (150.0 g) and tranferred to a 500 ml round-bottom flask fitted with a water-cooled condenser and heating mantle. 3,5-dibromosalicylic acid, Br₂-C₆H₂(OH)(COOH) (10.48 g) was then added to the heptamolybdate solution. Tridodecylamine (18.48 g) was then added. The mixture was warmed and dilute sulfuric acid (1.55 g concentrated H₂SO₄ plus 30.0 g deionized water) was added slowly to the dibromosalicylic acid/molybdate/amine suspension with stirring. The mixture was heated to reflux, with stirring, for 3 hours and then allowed to cool to room temperature. A yellow syrup collected at the bottom of the flask and the aqueous phase was decanted from the solid and discarded. The syrup was rinsed twice with deionized water, hexane (150.0 g) was added and the reactor was fitted with a Dean-Stark trap. The solution was heated to reflux which was continued until all water had been removed by azeotropic distillation. The remaining solvent was removed by vacuum distillation. The yellow syrup obtained was soluble in cyclohexane and hexane. Approximate structure: [(C₁₂H₂₅)₃NH]₂{[Br₂C₆H₂(O)(COO)]₂MoO₂}.

### Example 30

Ammonium heptamolybdate, (NH₄)₆Mo₇O₂₄·4H₂O (45.0 g) was dissolved in deionized water (270.0 g) and malic acid, (HOOC)CH₂CH(OH)(COOH) (17.1 g in 45 g. H₂O was then added to the heptamolybdate solution. The solution was tranferred to an 1 L round-bottom flask fitted with a water-cooled condenser and heating mantle. Tridodecylamine (133.22 g) was then added. The mixture was warmed and dilute sulfuric acid (11.17 g concentrated H₂SO₄ plus 34 g deionized water) was added slowly to the malic acid/molybdate/amine suspension with stirring. The mixture was heated to reflux, with stirring, for 4 hours and then allowed to cool to room temperature. A dark blue-green syrup collected at the bottom of the flask and the aqueous phase was decanted from the solid and discarded. The syrup was rinsed twice with deionized water, hexane (200.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Proposed structure: [(C₁₂H₂₅)₃NH]₂{[(OOC)CH₂CH(O)(COO)]₂Mo₄O₁₂}.

### Example 31

Ammonium heptamolybdate, (NH₄)₆Mo₇O₂₄·4H₂O (25.0 g) was dissolved in deionized water (400.0 g) and tranferred to an 1 L round-bottom flask fitted with a water-cooled condenser and heating mantle. Tridodecylamine (73.93 g) was then added. Citric acid, (HOOC)CH₂CH(OH)(COOH)CH₂(COOH) (14.88 g in 100.0 g H₂O) was then added dropwise to the molybdate/amine mixture. The mixture was heated to reflux, with stirring, for 3 hours and then allowed to cool to room temperature. A dark green syrup collected at the bottom of the flask and the aqueous phase was decanted from the solid and discarded. The solid was rinsed twice with deionized water, cyclohexane (300.0 g) was added and the reactor was fitted with a Dean-Stark trap. The solution was heated to reflux which was continued until all water had been removed by azeotropic distillation. The remaining solvent was removed by vacuum distillation. The dark green syrup obtained was soluble in cyclohexane and hexane.

### Example 32

Molybdenum trioxide, MoO₃ (25.0 g) was suspended in a solution of deionized water (250.0 g). Catechol, C₆H₄(OH)₂ was added to an 1 L round-bottomed flask fitted with a water-cooled condenser and heating mantle and the molybdate suspension was transferred to the flask. Tridodecylamine (181.32 g) was then added and the mixture was heated to reflux, with stirring, for 3 hours and then allowed to cool to room temperature. A dark red-orange syrup collected at the bottom of the flask and the aqueous phase was decanted from the solid and discarded. The solid was rinsed twice with deionized water, cyclohexane (280.0 g) , was added and the reactor was fitted with a Dean-Stark trap. The solution was heated to reflux which was continued until all water had been removed by azeotropic distillation. The remaining solvent was removed by vacuum distillation. The dark red-orange syrup obtained was soluble in cyclohexane. Approximate structure: [(C₁₂H₂₅)₃NH]₂{(C₆H₄O₂)₂MoO₂}.

### Example 33

Phenylphosphonic acid, C₆H₅P(O)(OH)₂ (43.94 g) was dissolved in deionized water (800.0 g) in a 2 L round-bottomed flask fitted with a water-cooled condenser and heating mantle. Molybdenum trioxide, MoO₃ (100.0 g) was added carefully to the phosphonic acid solution to avoid agglomeration. Tridodecylamine (290.12 g) was then added. The mixture was heated to reflux, with stirring, for 3 hours and then allowed to cool to room temperature. A dark blue-green syrup collected at the bottom of the flask and the aqueous phase was decanted from the solid and discarded. The solid was rinsed twice with deionized water, hexane (300.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Proposed structure: [(C₁₂H₂₅)₃NH]₄{(C₆H₅P)₂Mo₅O₂₁}.

### Example 34

Ammonium sulfate (NH₄)₂SO₄ (18.35 g) and phenylphosphonic acid C₆H₅P(O)(OH)₂ (43.94 g) were dissolved in deionized water (800.0 g) and the solution was transferred to a 2 L round-bottomed flask fitted with a water-cooled condenser and heating mantle. Molybdenum trioxide, MoO₃ (100.0 g) was added carefully to the ammonium sulfate/phosphonic acid solution to avoid agglomeration. Tridodecylamine (290.12 g) was then added. The mixture was heated to reflux, with stirring, for 4 hours and then allowed to cool to room temperature. A dark blue-green syrup collected at the bottom of the flask and the aqueous phase was decanted from the solid and discarded. The solid was rinsed twice with deionized water, hexane (300.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Proposed structure: [(C₁₂H₂₅)₃NH₄{(C₆H₅P)₂Mo₅O₂₁}.

### Example 35

Ammonium dimolybdate (NH₄)₂Mo₂O₇ (100.0 g) was dissolved in deionized water (550.0 g) and phenylphosphonic acid, C₆H₅P(O)(OH)₂ (43.90 g) was then added to the dimolybdate solution. The solution was transferred to a 2 L round-bottomed flask fitted with a water-cooled condenser and heating mantle. Tridodecylamine (245.74 g) was then added. The mixture was warmed and dilute sulfuric acid (30.06 g concentrated H₂SO₄ plus 150.0 g deionized water) was added slowly to the phosphonic acid/molybdate/amine suspension with stirring. The mixture was heated to reflux, with stirring, for 2 hours and then allowed to cool to room temperature. A dark blue-green syrup collected at the bottom of the flask and the aqueous phase was decanted from the solid and discarded. The solid was rinsed twice with deionized water, hexane (300.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Proposed structure: [(C₁₂H₂₅)₃NH]₄{(C₆H₅P)₂Mo₅O₂₁}.

### Example 36

Phosphorus acid H₃PO₃ (11.4 g) was dissolved in deionized water (400.0 g) in an 1 L round-bottomed flask fitted with a water-cooled condenser and heating mantle. Molybdenum trioxide, MoO₃ (50.0 g) was added carefully to the phosphorus acid solution to avoid agglomeration. Tridodecylamine (145.13 g) was then added. The mixture was heated to reflux, with stirring, for 3 hours and then allowed to cool to room temperature. A dark blue-green syrup collected at the bottom of the flask and the aqueous phase was decanted from the solid and discarded. The solid was rinsed twice with deionized water, hexane (200.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Proposed structure: [(C₁₂H₂₅)₃NH]₄{(HP)₂Mo₅O₂₁}.

### Example 37

Ammonium sulfate (NH₄)₂SO₄ (10.0 g) and phosphorus acid H₃PO (11.4 g) were dissolved in deionized water (400.0 g) and the solution was transferred to an 1 L round-bottomed flask fitted with a water-cooled condenser and heating mantle. MoO₃ (50.0 g) was added carefully to the ammonium sulfate/phosphorus acid solution to avoid agglomeration. Tridodecylamine (145.13 g) was then added. The mixture was heated to reflux, with stirring, for 3 hours and then allowed to cool to room temperature. A dark blue-green syrup collected at the bottom of the flask and the aqueous phase was decanted from the solid and discarded. The solid was rinsed twice with deionized water, hexane (200.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Proposed structure: [(C₁₂H₂₅)₃NH]₄{(HP)₂Mo₅O₂₁}.

### Example 38

Phosphorus acid H₃PO₄ (16.02 g) was dissolved in deionized water (400.0 g) in an 1 L round-bottomed flask fitted with a water-cooled condenser and heating mantle. Molybdenum trioxide, MoO₃ (50.0 g) was added carefully to the phosphoric acid solution to avoid agglomeration. Tridodecylamine (145.13 g) was then added. The mixture was heated to reflux, with stirring, for 4 hours and then allowed to cool to room temperature. A dark blue-green syrup collected at the bottom of the flask and the aqueous phase was decanted from the solid and discarded. The solid was rinsed twice with deionized water, hexane (200.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Proposed structure: [(C₁₂H₂₅)₃NH]₄{(HOP)₂Mo₅O₂₁}.

### Example 39

Ammonium sulfate (NH₄)₂SO₄ (10.0 g) and phosphoric acid H₃PO₄ (16.02 g) were dissolved in deionized water (400.0 g) and the solution was transferred to an 1 L round-bottomed flask fitted with a water-cooled condenser and heating mantle. Molybdenum trioxide, MoO₃ (50.0 g) was added carefully to the ammonium sulfate/phosphoric acid solution to avoid agglomeration. Tridodecylamine (145.13 g) was then added. The mixture was heated to reflux, with stirring, for 4 hours and then allowed to cool to room temperature. A dark blue-green syrup collected at the bottom of the flask and the aqueous phase was decanted from the solid and discarded. The solid was rinsed twice with deionized water, hexane (200.0 g) was added and the reactor was fitted with a Dean-Stark trap. The solution was heated to reflux which was continued until all water had been removed by azeotropic distillation. The remaining solvent was removed by vacuum distillation. The dark blue-green syrup obtained was soluble in cyclohexane and hexane. Proposed structure: [(C₁₂H₂₅)₃NH]₄{(HOP)₂Mo₅O₂₁}.

### Catalytic Activity Tests

The ligated polyoxomolybdate produced in Examples 1-4 were tested for their activity in polymerizing dicyclopentadiene under conditions of a RIM procedure.

Reaction injection molding components were prepared with the following recipes: Component A contained 88.2 wt. percent dicyclopentadiene/7.17 wt. percent cyclopentadiene trimer/3.52 wt. percent butadiene elastomer/0.5 wt. percent diethylaluminumchloride/0.25 wt. percent 2,4-dimethyl-3-pentanol/0.09 wt. percent n-propyl alcohol/0.18 wt. percent silicon tetrachloride.

Component B contained 88.63 wt. percent dicyclopentadiene/7.19 wt. percent cyclopentadiene trimer 3.52 wt. percent butadiene elastomer/0.66 wt. percent polyoxometalate catalyst.

The A and B components were reactivity tested using two pistons and a static mixer. The A and B components were first drawn into their respective piston of the reactivity tester. The components were then heated to 40°C inside the pistons. Next, the contents of the A and B component pistons of the reactivity tester were emptied through a static mixer into a disposable adiabatic chamber.

The temperature increase during the polymerization in the adiabatic chamber was monitored. The gel time is defined as a 4°C temperature rise from the initial temperature of 40°C.

The ligated polyoxomolybdates of Examples 1-4 provided gel times of 4.4, 3.7, 3.4, and 2.5 minutes, respectively.

### Solubility Tests

The ligated polyoxometalates of Examples 1-18 were tested for solubility in hexane, together with the organoammonium octamolybdate utilized as a control. The results are given in the following table.

**Table 1**

| **Solubility of Organopolyoxometalates of Examples 1 - 18** | | | | |
|---|---|---|---|---|
| **Example** | **Molecular Formula** | **R**^{**1**} | **Hexane soluble** | **% Mo** |
| **Comparative Example A** | [R¹₃NH]₄{β-Mo₈O₂₆} | C₁₂H₂₅ | < 10% | 23.44 |
| **1** | [R¹₃NH]₄{(C₆H₅PO₃)₂Mo₅O₁₅} | C₁₂H₂₅ | > 99% | 15.36 |
| **2** | [R¹₃NH]₄{(C₆H₅PO₃)₂Mo₅O₁₅} | C₁₂H₂₅ | > 99% | 15.36 |
| **3** | [R¹₃NH]₄{(C₆H₅PO₃)₂Mo₅O₁₅} | i-C₁₀H₂₁ | > 99% | 17.03 |
| **4** | [R¹₃NH]₄{(C₆H₅PO₃)₂Mo₅O₁₅} | i-C₈H₁₇ | < 5% | 19.53 |
| **5** | [R¹₃NMe]₄{(C₆H₅PO₃)₂Mo₅O₁₅} | n-C₈H₁₇ | < 5% | 19.10 |
| **6** | [R¹₂NH₂]₄{(C₆H₅PO₃)₂Mo₅O₁₅} | C₁₃H₂₇ | soluble | 18.75 |
| **7** | [R¹₃NH]₄{(C₆H₅PO₃)₂Mo₅O₁₅} | C₁₈H₃₇ | > 99% | 11.82 |
| **8** | [R¹₃NH]₄{(t-BuPO₃)₂Mo₅O₁₅} | C₁₂H₂₅ | soluble | 15.56 |
| **9** | [R¹₃NH]₄{(C₆H₅PO₃)₂W₅O₁₅} | C₁₂H₂₅ | > 99% | ----- |
| **11** | Composition of Example 11 | C₁₂H₂₅ | > 99% | NA |
| **12** | [R¹₃NH]₄{(C₆H₅OPO₃)₂Mo₅O₁₅} | C₁₂H₂₅ | > 99% | 15.28 |
| **13** | [R¹₃NH]₄{[(HOCH₂)₂CHOPO₃]₂Mo₅O₁₅} | C₁₂H₂₅ | > 99% | 15.25 |
| **14** | [R¹₃NH]₄{[(HOC(O)CH₂CH₂PO₃]₂Mo₅O₁₅} | C₁₂H₂₅ | soluble | 15.40 |
| **15** | [R¹₃NH]₄{(CH₃PO₃)₂Mo₅O₁₅} | C₁₂H₂₅ | soluble | 16.00 |
| **16** | [R¹₃NH]₂{(H₃NC₆H₄PO₃)₂Mo₅O₁₅} | C₁₂H₂₅ | soluble | 15.21 |
| **17** | [R¹₃NH]₄{(C₄H₉PO₃)₂Mo₅O₁₅} | C₁₂H₂₅ | soluble | 15.56 |
| **18** | Composition of Example 18 | C₁₂H₂₅ | soluble | NA |

The preceding examples can be repeated with similar success by substituting the generically or specifically described reactants and/or operating conditions of this invention for those used in the preceding examples.

## Claims

1. An organic soluble polyoxometalate composition comprising an onium cation component and a polyoxometalate anion component
wherein said onium cation is selected from the group consisting of organo-substituted ammonium, phosphonium, arsonium, and sulfonium groups, and said anion includes a molybdate or tungstate group that incorporates a ligand, and
wherein the total number of carbon atoms in said ammonium group is greater than 19, and the total number of carbon atoms is greater than 15 in said phosphonium, arsonium, and sulfonium groups.

2. The composition of claim 1 wherein said ligand is selected from the group consisting of substituted-phosphonates, substituted-phosphinates, deprotonated hydroxycarboxylates, deprotonated hydroxydicarboxylates, deprotonated hydroxytricarboxylates, deprotonated o-dihydroxybenzene, and mixtures thereof

3. The composition of claim 2 wherein said deprotonated hydroxycarboxylate is a deprotonated hydroxyaromatic acid wherein the deprotonated hydroxy substituent and deprotonated carboxylic substituent are located on contiguous aromatic ring carbon atoms.

4. The composition of claim 2 wherein the deprotonated hydroxycarboxylate is a deprotonated α-hydroxyacid.

5. The composition of claim 2 wherein said deprotonated hydroxydicarboxylate can be protonated on at least two of its deprotonated oxygen atoms.

6. The composition of claim 1 selected from compounds having the following formula:
[R¹ ₘER² _{m'}]ₙMₓO_{y}L_{z}
Wherein E is nitrogen, phosphorus, arsenic, or sulfur; M is molybdenum or tungsten; O is oxygen; L is a ligand selected from the group consisting of substituted-phosphonates, substituted-phosphinates, substituted arsonates, substituted stibonates, deprotonated hydroxycarboxylates, deprotonated hydroxydicarboxylates, deprotonated hydroxytricarboxylates, o-dihydroxybenzen and mixtures thereof; when E is N, As or P (m = 3 and m' = 1) and when E is S (m = 2 and m' = O); n = 6x-2y-Qz; where x and y represent the number of M and O atoms in the anion based on the valence of +6 for molybdenum and tungsten and -2 for oxygen, and Q is the charge of the ligand L; and z is 1 to 6; R¹ represents a radical independently selected from the group consisting of branched and unbranched C₁ to C₂₀ alkyl, C₂ to C₂₀ alkenyl, C₅ to C₂₀ cycloalkyl, C₆ to C₂₄ aryl, C₆ to C₂₄ aryloxy, C₇ to C₄₀ alkaryl, and ring structures formed with another R¹ group, including those wherein one or two -CH₂- groups are replaced by functional groups selected from -O-, -C(O)-, -OC(O)-, and -CH(OH)-; R² is independently selected from hydrogen or R¹, with the proviso that when E is nitrogen the sum of all carbon atoms represented by R¹ and R² is at least 20, and R¹ and R² cannot all be hydrogen; and when E is arsenic, phosphorus, and sulfur, the sum of all carbon atoms represented by R¹ and R² is at least 16.

7. The composition of claim 6 wherein the ligand L is a substituted-phosphonate represented by the formula:
R³PO₃⁽²⁻⁾
where R³ is hydrogen, hydroxy, branched or unbranched C₁ to C₂₀ alkyl, branched or unbranched C₁ to C₁₉ carboxyalkyl, branched and unbranched C₁ to C₂₀ hydroxyalkyl, C₆ to C₂₄ aryl, C₆ to C₂₄ aryloxy, C₇ to C₄₀ aralkyl, deprotonated polyols, C₆ to C₂₄ protonated aminoaryl, and C₁ to C₂₀ protonated aminoalkyl.

8. The composition of claim 6 wherein the ligand L is a substituted-phosphinate represented by the formula:
R³PO₂H⁽⁻⁾
where R³ is as defined in claim 7.

9. The composition of claim 6 wherein the ligand L is a deprotonated hydroxycarboxylate selected from the group consisting of C₆ to C₂₄ deprotonated hydroxyaromatic acids, and deprotonated α-hydroxyacids, wherein said deprotonated hydroxy and deprotonated carboxylic moieties on the hydroxyaromatic acid are located on contiguous aromatic ring carbon atoms.

10. The composition of claim 9 wherein the deprotonated hydroxyaromatic acids are represented by the formula: 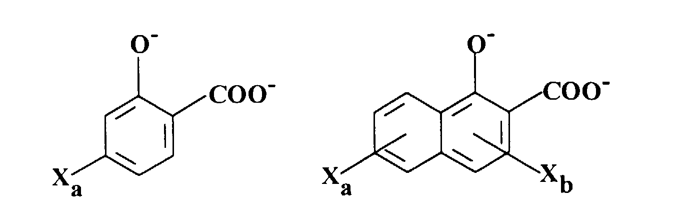 wherein X is independently selected from the group consisting of branched and unbranched C₁ to C₂₀ alkyl and halogen; a is 0 to 4, and b is 0 to 2.

11. The composition of claim 9 wherein the deprotonated α-hydroxyacids are represented by the formula: 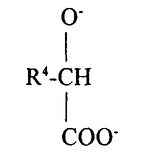 wherein R⁴ is selected from branched and unbranched C₁ to C₂₀ alkyl.

12. The composition of claim 6 wherein the ligand L is a deprotonated hydroxydicarboxylate selected from ligands of the formula: 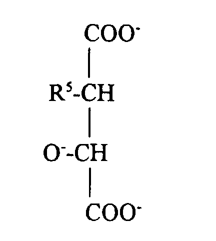 wherein R⁵ is hydrogen, branched or unbranched C₁ to C₂₀ alkyl or C₂ to C₂₀ alkenyl.

13. The composition of claim 10 wherein one or two of the deprotonated oxygen atoms are protonated.

14. The composition of claim 6 wherein the ligand L is a deprotonated hydroxytricarboxylate selected from compounds of the following formula: 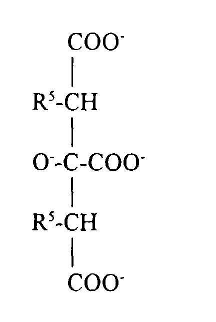 wherein R⁵ is independently selected from radicals as defined in claim 12.

15. The composition of claim 6 wherein the ligand L is a deprotonated o-dihydroxybenzene selected from ligands of the formula: 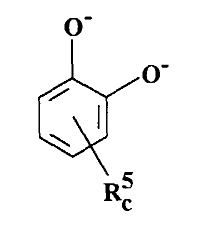 wherein R⁵ is independently selected from radicals as defined in claim 12; and c is 0 to 4.

16. The composition of claim 6 wherein n is 2 to 6; x is 1 to 12; and y is 2 to 46.

17. The composition of claim 6 wherein E is nitrogen, R¹ is independently selected from branched and unbranched C₈ to C₁₈ alkyl; R² is selected from hydrogen, or branched and unbranched C₁ to C₁₈ alkyl; M is molybdenum; and L is a substituted-phosphonate.

18. The composition of claim 17 further represented as follows:
[R¹ ₃NR²]₄Mo₅O₁₅(R³PO₃)₂
wherein R³ represents hydrogen, hydroxy, branched or unbranched C₁ to C₂₀ alkyl, branched or unbranched C₁ to C₁₉ carboxyalkyl, branched and unbranched C₁ to C₂₀ hydroxyalkyl, C₆ to C₂₄ aryl, C₆ to C₂₄ aryloxy, C₇ to C₄₀ aralkyl, deprotonated polyols, C₆ to C₂₄ protonated aminoaryl, and C₁ to C₂₀ protonated aminoalkyl.

19. The composition of claim 18 wherein R¹ is independently branched or unbranched C₁ to C₁₈ alkyl, and R² is hydrogen.

20. The composition of claim 18 wherein R¹ is C₁₂ alkyl and R³ is phenyl.

21. A polymerizable feed composition comprising at least one norbornene functional monomer and the catalyst component as defined in any one of claims 1 to 20.

22. A process for preparing a polymeric article by the in-mold bulk polymerization of a norbornene functional monomer comprising: conveying a reactive norbornene functional monomer composition into a mold and polymerizing said monomer composition via ring-opening metathesis polymerization, wherein said monomer composition comprises at least one norbornene functional monomer, a cocatalyst, and the catalyst component as defined in any one of claims 1 to 20.

23. The process of claim 22 wherein the cocatalyst is selected from the group consisting of alkylaluminum halides, alkoxyalkylaluminum halides, aryloxyalkylaluminum halides, and mixtures thereof.

24. The process of claim 22 wherein the norbornene functional monomer is selected from the group consisting of norbornene, dicyclopentadiene, trimers of cyclopentadiene, tetracyclododecene, ethylidene norbornene, and mixtures thereof.

## Patentansprüche

1. Organisch-lösliche Polyoxometalat-Zusammensetzung, die eine Oniumkation-Komponente und eine Polyoxometalatanion-Komponente umfasst, worin das Oniumkation aus der aus organosubstituierten Ammonium-, Phosphonium-, Arsonium- und Sulfoniumgruppen bestehenden Gruppe ausgewählt ist, und das Anion eine Molybdat- oder Wolframatgruppe einschließt, in die ein Ligand eingefügt ist, und worin die Gesamtzahl der Kohlenstoffatome in der Ammoniumgruppe größer als 19 ist und die Gesamtzahl der Kohlenstoffatome in den Phosphonium-, Arsonium- und Sulfoniumgruppen größer als 15 ist.

2. Zusammensetzung gemäß Anspruch 1, worin der Ligand aus der aus substituierten Phosphonaten, substituierten Phosphinaten, deprotonierten Hydroxycarboxylaten, deprotonierten Hydroxydicarboxylaten, deprotonierten Hydroxytricarboxylaten, deprotoniertem o-Dihydroxylbenzol und Mischungen derselben bestehenden Gruppe ausgewählt ist.

3. Zusammensetzung gemäß Anspruch 2, worin das deprotonierte Hydroxycarboxylat eine deprotonierte hydroxyaromatische Säure ist, worin der deprotonierte Hydroxy-Substituent und der deprotonierte Carboxyl-Substituent sich an einander benachbarten aromatischen Ringkohlenstoffatomen befinden.

4. Zusammensetzung gemäß Anspruch 2, worin das deprotonierte Hydroxycarboxylat eine deprotonierte α-Hydroxysäure ist.

5. Zusammensetzung gemäß Anspruch 2, worin das deprotonierte Hydroxydicarboxylat an wenigstens zweien seiner deprotonierten Sauerstoffatome protoniert werden kann.

6. Zusammensetzung gemäß Anspruch 1, die aus Verbindungen der folgenden Formel:
[R¹ ₘER² _{m'}]ₙ MₓO_{y}L_{z}
ausgewählt ist, worin E Stickstoff, Phosphor, Arsen oder Schwefel ist; M Molybdän oder Wolfram ist; O Sauerstoff ist; L ein Ligand ist, der aus der aus substituierten Phosphonaten, substituierten Phosphinaten, substituierten Arsonaten, substituierten Stibonaten, deprotonierten Hydroxycarboxylaten, deprotonierten Hydroxydicarboxylaten, deprotonierten Hydroxytricarboxylaten, o-Dihydroxybenzol und Mischungen derselben bestehenden Gruppe ausgewählt ist; wenn E N, As oder P ist (m = 3 und m' = 1) und wenn E S (m = 2 und m' = 0) ist; n = 6x-2y-Q_{z}; worin x und y die Anzahl von M- und 0-Atomen in dem Anion darstellen, bezogen auf die Wertigkeit +6 für Molybdän und Wolfram und -2 für Sauerstoff, und Q die Ladung des Liganden L ist; und z 1 bis 6 ist; R¹ einen Rest darstellt, der unabhängig aus der Gruppe ausgewählt ist, bestehend aus verzweigtem und unverzweigtem C₁-C₂₀-Alkyl, C₂-C₂₀-Alkenyl, C₅-C₂₀-Cycloalkyl, C₆-C₂₄-Aryl, C₆-C₂₄-Aryloxy, C₇-C₄₀-Alkaryl und Ringstrukturen, die mit einer anderen R¹-Gruppe gebildet werden, einschließlich solcher, worin 1 oder 2 -CH₂-Gruppen durch funktionelle Gruppen ersetzt werden, die aus -O-, -C(O)-, -OC(O)- und-CH(OH)- ausgewählt sind; R² unabhängig aus Wasserstoff oder R¹ ausgewählt ist, mit der Maßgabe, dass, wenn E Stickstoff ist, die Summe aller durch R¹ und R² dargestellten Kohlenstoffatome wenigstens 20 ist; und R¹ und R² nicht alle Wasserstoff sein können; und wenn E Arsen, Phosphor und Schwefel ist, die Summe aller durch R¹ und R² dargestellten Kohlenstoffatome wenigstens 16 ist.

7. Zusammensetzung gemäß Anspruch 6, worin der Ligand L ein substituiertes Phosphonat ist, das durch die Formel:
R³PO₃⁽²⁻⁾
dargestellt wird, worin R³ Wasserstoff, Hydroxy, verzweigtes oder unverzweigtes C₁-C₂₀-Alkyl, verzweigtes oder unverzweigtes C₁-C₁₉-Carboxyalkyl, verzweigtes und unverzweigtes C₁-C₂₀-Hydroxyalkyl, C₆-C₂₄-Aryl, C₆-C₂₄-Aryloxy, C₇-C₄₀-Aralkyl, deprotonierte Polyole, protoniertes C₆-C₂₄-Aminoaryl und protoniertes C₁-C₂₀-Aminoalkyl ist.

8. Zusammensetzung gemäß Anspruch 6, worin der Ligand L ein substituiertes Phosphinat ist, das durch die Formel:
R³PO₂H⁽⁻⁾
dargestellt wird, worin R³ wie im Anspruch 7 definiert ist.

9. Zusammensetzung gemäß Anspruch 6, worin der Ligand L ein deprotoniertes Hydroxycarboxylat ist, das aus der aus deprotonierten hydroxyaromatischen C₆-C₂₄-Säuren und deprotonierten α-Hydroxysäuren bestehenden Gruppe ausgewählt ist, worin die deprotonierten Hydroxy-Reste und die deprotonierten Carboxyl-Reste an einander benachbarten aromatischen Ringkohlenstoffatomen an der hydroxyaromatischen Säure angeordnet sind.

10. Zusammensetzung gemäß Anspruch 9, worin die deprotonierten hydroxyaromatischen Säuren durch die Formel: 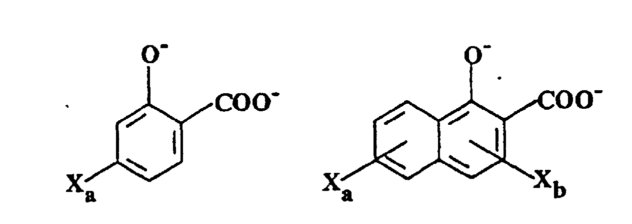 dargestellt werden, worin X unabhängig aus der aus verzweigtem und unverzweigtem C₁-C₂₀-Alkyl und Halogen bestehenden Gruppe ausgewählt ist; a 0 bis 4 ist und b 0 bis 2 ist.

11. Zusammensetzung gemäß Anspruch 9, worin die deprotonierten α-Hydroxysäuren durch die Formel: 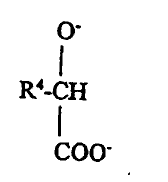 dargestellt werden, worin R⁴ aus verzweigtem und unverzweigtem C₁-C₂₀-Alkyl ausgewählt ist.

12. Zusammensetzung gemäß Anspruch 6, worin der Ligand L ein deprotoniertes Hydroxydicarboxylat ist, das aus Liganden der Formel 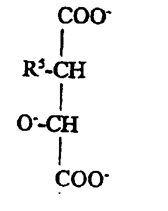 ausgewählt ist, worin R⁵ Wasserstoff, verzweigtes oder unverzweigtes C₁-C₂₀-Alkyl oder C₂-C₂₀-Alkenyl ist.

13. Zusammensetzung gemäß Anspruch 10, worin eines oder zwei der deprotonierten Sauerstoffatome protoniert werden.

14. Zusammensetzung gemäß Anspruch 6, worin der Ligand L ein deprotoniertes Hydroxycarboxylat ist, das aus Verbindungen der folgenden Formel: 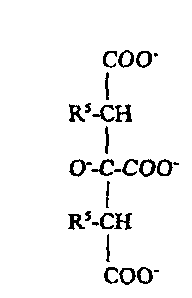 ausgewählt ist, worin R⁵ unabhängig aus Resten gemäß der Definition im Anspruch 12 ausgewählt ist.

15. Zusammensetzung gemäß Anspruch 6, worin der Ligand L ein deprotoniertes o-Dihydroxybenzol ist, das aus Liganden der folgenden Formel: 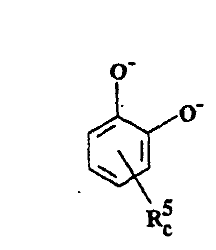 ausgewählt ist, worin R⁵ unabhängig aus Resten gemäß der Definition im Anspruch 12 ausgewählt ist, und c 0 bis 4 ist.

16. Zusammensetzung gemäß Anspruch 6, worin n 2 bis 6 ist; x 1 bis 12 ist; und y 2 bis 46 ist.

17. Zusammensetzung gemäß Anspruch 6, worin E Stickstoff ist, R¹ unabhängig aus verzweigtem und unverzweigtem C₈-C₁₈-Alkyl ausgewählt ist; R² aus Wasserstoff oder verzweigtem und unverzweigtem C₁-C₁₈-Alkyl ausgewählt ist; M Molybdän ist; und L ein substituiertes Phosphonat ist.

18. Zusammensetzung gemäß Anspruch 17, die weiterhin wie folgt:
[R¹ ₃NR²]₄Mo₅O₁₅(R³PO₃)₂
dargestellt wird, worin R³ Wasserstoff, Hydroxy, verzweigtes oder unverzweigtes C₁-C₂₀-Alkyl, verzweigtes oder unverzweigtes C₁-C₁₉-Carboxyalkyl, verzweigtes und unverzweigtes C₁-C₂₀-Hydroxyalkyl, C₆-C₂₄-Aryl, C₆-C₂₄-Aryloxy, C₇-C₄₀-Aralkyl, deprotonierte Polyole, protoniertes C₆-C₂₄-Aminoaryl und protoniertes C₁-C₂₀-Aminoalkyl ist.

19. Zusammensetzung gemäß Anspruch 18, worin R¹ unabhängig verzweigtes oder unverzweigtes C₁-C₁₈-Alkyl ist, und R² Wasserstoff ist.

20. Zusammensetzung gemäß Anspruch 18, worin R¹ C₁₂-Alkyl ist, und R³ Phenyl ist.

21. Polymerisierbare Beschickungszusammensetzung, umfassend wenigstens ein Norbornen-funktionelles Monomer und die Katalysator-Komponente, gemäß der Definition in irgendeinem der Ansprüche 1 bis 20.

22. Verfahren zur Herstellung eines polymeren Gegenstandes durch In-Masse-Polymerisation im Formwerkzeug eines Norbornen-funktionellen Monomers, umfassend das Einführen einer reaktiven, Norbornen-funktionellen Monomer-Zusammensetzung in ein Werkzeug und die Polymerisation der Monomer-Zusammensetzung über eine Ringöffnungs-Metathesepolymerisation , worin die Monomer-Zusammensetzung wenigstens ein Norbornen-funktionelles Monomer, einen Cokatalysator und die Katalysator-Komponente gemäß der Definition in irgendeinem der Ansprüche 1 bis 20 umfasst

23. Verfahren gemäß Anspruch 22, worin der Cokatalysator aus der aus Alkylaluminiumhalogeniden, Alkoxyalkylaluminiumhalogeniden, Aryloxyalkylaluminiumhalogeniden und Mischungen derselben bestehenden Gruppe ausgewählt ist.

24. Verfahren gemäß Anspruch 22, worin das Norbornen-funktionelle Monomer aus der aus Norbornen, Dicyclopentadien, Trimeren von Cyclopentadien, Tetracylododecen, Ethylidennorbornen und Mischungen derselben bestehenden Gruppe ausgewählt ist.

## Revendications

1. Composition de polyoxométallate soluble organique comprenant un composant cationique onium et un composant anionique polyoxométallate,
dans laquelle ledit cation onium est choisi dans l'ensemble constitué par les groupes ammonium, phosphonium, arsonium et sulfonium organo-substitués, et ledit anion comprend un groupe molybdate ou tungstate qui contient un ligand, et
dans laquelle le nombre total d'atomes de carbone dans ledit groupe ammonium est supérieur à 19, et le nombre total d'atomes de carbone est supérieur à 15 dans lesdits groupes phosphonium, arsonium et sulfonium.

2. Composition selon la revendication 1, dans laquelle ledit ligand est choisi dans l'ensemble constitué par les phosphonates substitués, les phosphinates substitués, les hydroxycarboxylates déprotonés, les hydroxydicarboxylates déprotonés, les hydroxytricarboxylates déprotonés, l'o-dihydroxybenzène déprotoné, et leurs mélanges.

3. Composition selon la revendication 2, dans laquelle ledit hydroxycarboxylate déprotoné est un acide hydroxyaromatique déprotoné dans lequel le substituant hydroxy déprotoné et le substituant carboxylique déprotoné sont situés sur des atomes de carbone contigus du cycle aromatique.

4. Composition selon la revendication 2, dans laquelle l'hydroxycarboxylate déprotoné est un α-hydroxyacide déprotoné.

5. Composition selon la revendication 2, dans laquelle ledit hydroxydicarboxylate déprotoné peut être protoné sur au moins deux de ses atomes d'oxygène déprotonés.

6. Composition selon la revendication 1, choisie parmi les composés répondant à la formule suivante :
[R¹ ₘER² _{m'}]ₙMₓO_{y}L_{z}
dans laquelle E est l'azote, le phosphore, l'arsenic ou le soufre ; M est le molybdène ou le tungstène ; O est l'oxygène ; L est un ligand choisi dans l'ensemble constitué par les phosphonates substitués, les phosphinates substitués, les arsonates substitués, les stilbonates substitués, les hydroxycarboxylates déprotonés, les hydroxydicarboxylates déprotonés, les hydroxytricarboxylates déprotonés, l'o-dihydroxybenzène déprotoné, et leurs mélanges ; quand E est N, As ou P (m = 3 et m' = 1) et quand E est S (m = 2 et m' = 0), alors n = 6x - 2y - Qz ; où x et y représentent le nombre d'atomes de M et O dans l'anion sur la base d'une valence de +6 pour le molybdène et le tungstène et de -2 pour l'oxygène, et Q est la charge du ligand L ; et z vaut de 1 à 6 ; R¹ représente un radical indépendamment choisi dans l'ensemble constitué par les radicaux alkyle en C₁ à C₂₀, alcényle en C₂ à C₂₀, cycloalkyle en C₅ à C₂₀, aryle en C₆ à C₂₄, aryloxy en C₆ à C₂₄, alkaryle en C₇ à C₄₀, ramifiés et non ramifiés, et les structures cycliques formées avec un autre groupe R¹, y compris celles dans lesquelles un ou deux groupes -CH₂- sont remplacés par des groupes fonctionnels choisis parmi -O-, -C(O)-, -OC(O)- et -CH(OH)-; R² est indépendamment choisi parmi l'hydrogène et R¹, à la condition que lorsque E est l'azote, la somme de tous les atomes de carbone représentés par R¹ et R² soit d'au moins 20, et que R¹ et R² ne puissent pas être tous l'hydrogène ; et lorsque E est l'arsenic, le phosphore ou le soufre, la somme de tous les atomes de carbone représentés par R¹ et R² soit d'au moins 16.

7. Composition selon la revendication 6, dans laquelle le ligand L est un phosphonate substitué représenté par la formule :
R³PO₃⁽²⁻⁾
dans laquelle R³ est l'hydrogène ou un radical hydroxy, alkyle en C₁ à C₂₀ ramifié ou non ramifié, carboxyalkyle en C₁ à C₁₉ ramifié ou non ramifié, hydroxyalkyle en C₁ à C₂₀ ramifié ou non ramifié, aryle en C₆ à C₂₄, aryloxy en C₆ à C₂₄, aralkyle en C₇ à C₄₀, aminoaryle protoné en C₆ à C₂₄, aminoalkyle protoné en C₁ à C₂₀, ou un polyol déprotoné.

8. Composition selon la revendication 6, dans laquelle le ligand L est un phosphinate substitué représenté par la formule ;
R³PO₂H⁽⁻⁾
dans laquelle R³ est tel que défini dans la revendication 7.

9. Composition selon la revendication 6, dans laquelle le ligand L est un hydroxycarboxylale déprotoné choisi dans l'ensemble constitué par les acides hydroxyaromatiques déprotonés en C₆ à C₂₄ et les α-hydroxyacides déprotonés, où lesdits fragments hydroxy déprotoné et carboxylique déprotoné sur l'acide hydroxyaromatique sont situés sur des atomes de carbone contigus du cycle aromatique.

10. Composition selon la revendication 9, dans laquelle les acides hydroxyaromatiques déprotonés sont représentés par la formule : 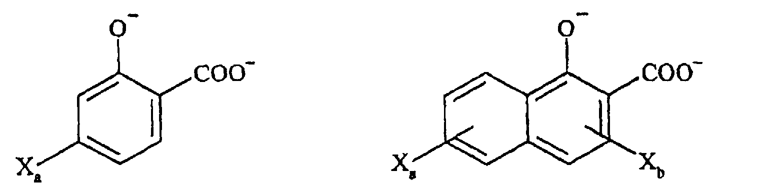 dans laquelle X est indépendamment choisi dans l'ensemble constitué par les radicaux alkyle en C₁ à C₂₀ ramifiés et non ramifiés et les halogènes ; a vaut de 0 à 4, et b vaut de 0 à 2.

11. Composition selon la revendication 9, dans laquelle les α-hydroxyacides déprotonés sont représentés par la formule : 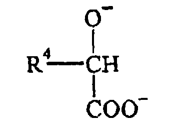 dans laquelle R⁴ est choisi parmi les radicaux alkyle en C₁ à C₂₀ ramifiés et non ramifiés.

12. Composition selon la revcndication 6, dans laquelle le ligand L est un hydroxydicarboxylate déprotoné choisi parmi les ligands de formule : 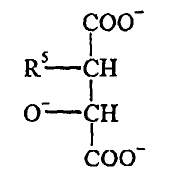 dans laquelle R⁵ est l'hydrogène ou un radical alkyle en C₁ à C₂₀ ou alcényle en C₂ à C₂₀ ramifié ou non ramifié.

13. Composition selon la revendication 10, dans laquelle un ou deux des atomes d'oxygène déprotonés sont protonés.

14. Composition selon la revendication 6, dans laquelle le ligand L est un hydroxytricarboxylate déprotoné choisi parmi les composés correspondant à la formule suivante : 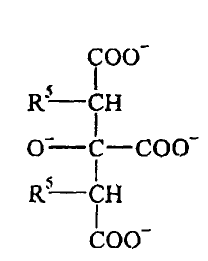 dans laquelle R⁵ est indépendamment choisi parmi les radicaux tels que définis dans la revendication 12.

15. Composition selon la revendication 6, dans laquelle le ligand L est un o-dihydroxybenzène déprotoné choisi parmi les ligands de formule : 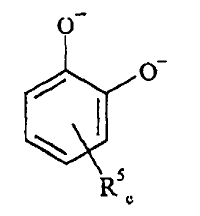 dans laquelle R⁵ est indépendamment choisi parmi les radicaux tels que définis dans la revendication 12 ; et c vaut de 0 à 4.

16. Composition selon la revendication 6, dans laquelle n vaut de 2 à 6 ; x vaut de 1 à 12 ; et y vaut de 2 à 46.

17. Composition selon la revendication 6, dans laquelle E est l'azote, R¹ est indépendamment choisi parmi les radicaux alkyle en C₈ en C₁₈ ramifiés et non ramifiés ; R² est choisi parmi l'hydrogène et les radicaux alkyle en C₁ à C₁₈ ramifiés et non ramifiés ; M est le molybdène ; et L est un phosphonate substitué.

18. Composition selon la revendication 17, en outre représentée comme suit :
[R¹ ₃NR²]₄Mo₅O₁₅(R³PO₃)₂
dans laquelle R³ représente l'hydrogène ou un radical hydroxy, alkyle en C₁ à C₂₀ ramifié ou non ramifié, carboxyalkyle en C₁ à C₁₉ ramifié ou non ramifié, hydroxyalkyle en C₁ à C₂₀ ramifié ou non ramifié, aryle en C₆ à C₂₄, aryloxy en C₆ à C₂₄, aralkyle en C₇ à C₄₀, aminoaryle protoné en C₆ à C₂₄ ou aminoalkyle en C₁ à C₂₀, ou un polyol déprotoné.

19. Composition selon la revendication 18, dans laquelle R¹ est indépendamment un radical alkyle en C₁ à C₁₈ ramifié ou non ramifié, et R² est l'hydrogène.

20. Composition selon la revendication 18, dans laquelle R¹ est un radical alkyle en C₁₂ et R³ est le radical phényle.

21. Composition de charge polymérisable comprenant au moins un monomère à fonctionnalité norbomène et le composant catalyseur tel que défini dans l'une quelconque des revendications 1 à 20.

22. Procédé pour préparer un article polymère par polymérisation en masse dans un moule d'un monomère à fonctionnalité norbomène comprenant : le convoyage d'une composition de monomère à fonctionnalité norbomène réactive dans un moule et la polymérisation de ladite composition de monomère par l'intermédiaire d'une polymérisation par une réaction de double décomposition par décyclisation, dans lequel ladite composition de monomère comprend au moins un monomère à fonctionnalité norbornène, un cocatalyseur, et le composant catalyseur tel que défini dans l'une quelconque des revendications 1 à 20.

23. Procédé selon la revendication 22, dans lequel le cocatalyseur est choisi dans l'ensemble constitué par les halogénures d'alkyl-aluminium, les halogénures d'alcoxyalkyl-aluminium, les halogénures d'aryloxyalkyl-aluminium, et leurs mélanges.

24. Procédé selon la revendication 22, dans lequel le monomère à fonctionnalité norbomène est choisi dans l'ensemble constitué par le norbornène, le dicyclopentadiène, les trimères de cyclopentadiène, le tétracyclododécène, l'éthylidène-norbornène, et leurs mélanges.
